# EUROPEAN PATENT APPLICATION

(11) **EP 1 213 111 A2**
(43) Date of publication of application: **12.06.2002**
(21) Application number: 01403165.2
(22) Date of filing: 07.12.2001
(51) Int. Cl.: B29B 13/08, B29C 35/08, B29C 45/17, B29B 7/88, C08J 3/28, C08K 3/34, C08L 67/04

(54) **Biodegradable resin material and method for producing the same**

(30) Priority: 07.12.2000 JP 2000372428; 07.12.2000 JP 2000372425; 07.12.2000 JP 2000372426; 07.12.2000 JP 2000372427
(71) Applicant: SONY CORPORATION, Tokyo (JP)
(72) Inventor: Fujihira, Yuko, c/o Sony Corporation, Shinagawa-ku, Tokyo (JP); Noguchi, Tsutomu, c/o Sony Corporation, Shinagawa-ku, Tokyo (JP); Mori, Hiroyuki, c/o Sony Corporation, Shinagawa-ku, Tokyo (JP)
(74) Representative: Thévenet, Jean-Bruno

(57) **Abstract**

Mica is incorporated into a biodegradable resin material comprised mainly of polylactic acid, for example, into polylactic acid which is an aliphatic polyester resin. It is desired to incorporate into polylactic acid mica and a carbodiimide compound as an additive for suppressing hydrolysis of polylactic acid. Further, the biodegradable resin composition is subjected to aging by heating and desirably further using an electromagnetic wave or the like to suppress rapid lowering of the storage elastic modulus, and the biodegradable resin composition is used as a material for household electric appliances and housing materials.

## Description

### BACKGROUND OF THE INVENTION

### Field of the Invention

The present invention relates to a method for improving a biodegradable resin material in elastic modulus and a product obtained by the method. More particularly, the present invention is concerned with a biodegradable resin composition obtained by adding natural mica to a biodegradable resin material and irradiating the resultant mixture with a microwave for a predetermined time so that the biodegradable resin material is subjected to heat treatment, a housing material comprising the biodegradable resin composition, and a method for improving a biodegradable resin material in elastic modulus.

### Description of Related Art

"Used Household Appliances Recycling Law" has been enforced. However, part of electric appliances are not recovered or recycled but sometimes disposed of as incombustible waste. When a great number of electric appliances in a small size are on the market, they possibly cause a large amount of waste as a whole. Such waste poses a severe problem since places for disposal of waste lack now.

As a common method for disposal of waste, there is a method in which waste is subjected to shredder treatment. However, this shredder treatment merely reduces the volume of the waste, and, when the treated waste is buried, the waste remains for years as it is, and hence this treatment does not basically solve the problem. In addition, the buried waste possibly adversely affects an ecosystem. When the shredder dust of appliances is recycled as a material, the following problem arises. All parts of the appliances are together shredded finely. Therefore, for example, valuable materials (e.g., copper) are disadvantageously mixed with invaluable materials, so that the purity of the valuable materials recovered is lowered, causing the recovery effect to be lowered.

For solving the above problem, first, there is a method in which the structure of an electric appliance is changed as follows. Housing and structure parts constituting most of the body of an electric appliance are produced from a biodegradable material, and an electric appliance is assembled by the biodegradable parts, and electronic parts, boards, and non-biodegradable parts by, for example, using screws or fitting. Thus, they can be easily separated from one another after use. By disassembling the electric appliance having such a structure, the parts of the appliance can be divided into parts to be recycled and parts capable of being disposed of as they are, so that these parts can be treated separately.

The outermost surface portions of housings of, for example, radios, microphones, portable (hanging-on-the-neck-type) television sets, keyboards, Walkman (registered trademark), portable telephones, radio-cassette recorders, and earphones are produced from a biodegradable material. By producing the parts which are frequently contacted with human bodies from a biodegradable material, there can be provided electric appliances having higher safety than that of electric appliances containing outermost parts produced from a synthetic resin.

However, the types of the biodegradable materials which can be used in such housings and structure materials for electric appliances are limited, and the materials need to have required physical properties. First, the biodegradable material needs to meet a requirement such that it is not deformed even when being kept in an atmosphere at 60°C at a relative humidity of 80 % (% RH) for 100 hours.

Currently, plastics having biodegradability (biodegradable resins) are roughly classified into three types according to the molecular skeleton, i.e., one having an aliphatic polyester resin, one having polyvinyl alcohol, and one having polysaccharide. Here, the "biodegradable plastic" is defined as a plastic which is decomposed after use by microorganisms in the natural world into a low molecular compound, eventually into water and carbon dioxide (Biodegradable Plastics Society, ISO/TC-207/SC3).

Among these biodegradable plastics, aliphatic polyester resins (biodegradable polyester resins) generally have a low melting temperature, and thus do not achieve physical properties suitable for practical molded articles, especially satisfactory heat resistance. Therefore, the aliphatic polyester resins have not been used in housings for electronic equipment and the like. As crystal nucleating agents for improving the biodegradable resin in heat resistance and elastic modulus, phosphoric acid nucleating agents and sorbitol nucleating agents are known. These agents are satisfactorily effective to polypropylene, but the effect to biodegradable polyester resins is unsatisfactory.

Biodegradable plastics, mainly aliphatic polyester resins begin to be utilized up to the present in materials for agriculture, forestry, and fisheries (e.g., films, plant pots, fishing lines, and fishing nets), materials for civil engineering works (e.g., water retention sheets and plant nets), and the field of packaging and container (which are difficult to recycle due to the adhering earth and food).

Biodegradable plastics including the above biodegradable polyester resins are required to have functions for use at the same level of that of conventional plastics, for example, high strength, excellent water resistance, excellent moldability, and excellent heat resistance, and further required to be rapidly decomposed after being disposed of by microorganisms generally present in the natural world.

An aliphatic polyester resin containing no special additive, which is the related art biodegradable plastic, is difficult to solely apply to household electric appliances and housing materials due to its poor mechanical properties. For example, polylactic acid has a glass transition temperature [Tg; temperature at which the storage elastic modulus is lowered to about 1/10 to about 1/100 of that at room temperature] of about 60°C. That is, the storage elastic modulus of polylactic acid is rapidly lowered at 60°C or higher from about 1 × 10⁹ Pa (at room temperature) to about 1 × 10⁷ Pa. For this reason, polylactic acid is likely to suffer mechanical deformation.

Thus, for example, when a housing made of polylactic acid is mechanically processed, an external force is exerted on the housing in a state such that the housing is heated by frictional heat and the like, and therefore the housing is likely to be deformed, causing a problem in that it is difficult to finish the housing in a desired shape. Further, there is also a problem in that a molded article made of polylactic acid suffers deformation when subjected to aging at 60°C for 100 hours.

### SUMMARY OF THE INVENTION

According to the present invention, there is provided a method for improving elastic modulus of a biodegradable resin composition, a housing material comprising the biodegradable resin composition, and a biodegradable resin material comprised mainly of a biodegradable resin by irradiating the biodegradable resin with an electromagnetic wave.

According to the present invention, there is also provided a biodegradable resin composition which comprises synthetic mica as a crystal nucleating agent and an aliphatic polyester resin in an outer layer, a housing material comprising the biodegradable resin composition, a method for producing the biodegradable resin composition, and a method for improving the biodegradable resin composition in elastic modulus.

The method for improving a biodegradable resin material in elastic modulus of the present invention is characterized in that the method comprises irradiating the biodegradable resin material which is comprised mainly of a biodegradable resin with a microwave. As an example of the method of irradiating the material with a microwave, there can be mentioned a method in which the biodegradable resin material is injected into a mold by means of, for example, a melt-extruder to form an injection-molded product, and then the biodegradable resin material in the form of the injection-molded product in the mold is irradiated with a microwave. It is preferred that the time for the irradiation of the material with a microwave is 1 to 10 minutes.

Upon studying on the techniques for preventing housings comprised of a biodegradable resin material for electronic equipment from suffering deformation by heating, the present inventor has found that, by irradiating a housing made of polylactic acid with a microwave, the storage elastic modulus of the housing at the glass transition temperature of polylactic acid (60°C) or higher is increased from about 1 × 10⁷ Pa to about 1 × 10⁹ Pa, and thus the present invention has been completed.

Specifically, it has been found that, for increasing the storage elastic modulus of a housing made of polylactic acid from about 1 × 10⁷ Pa to about 1 × 10⁸ Pa, aging in an atmosphere at 80°C at a relative humidity of a general value for about 3 hours is needed, and that the storage elastic modulus is increased to about 1 × 10⁹ Pa by aging in an atmosphere at 80°C at a relative humidity of 80% for 15 minutes. However, it is confirmed that the storage elastic modulus of the above housing is increased to about 1 × 10⁹ Pa by aging in which the housing is irradiated with a microwave by means of a microwave oven for a shorter time.

Examples of biodegradable resins as described above include aliphatic polyester resins, and examples of the aliphatic polyester resins include polylactic acid.

It is preferred that the method for improving elastic modulus of the present invention is applied to a biodegradable resin material which contains an additive for suppressing hydrolysis, and, as the additive, a carbodiimide compound is preferred. In addition, when the biodegradable resin is an aliphatic polyester resin, it is preferred that the additive is present in an amount of 0.1 to 2.0 % by weight, based on the weight of the aliphatic polyester resin.

Further, it is preferred that the method for improving elastic modulus of the present invention is applied to a biodegradable resin material which contains mica. As the mica, synthetic mica or natural mica can be used. As the natural mica, one obtained by granulation of natural mica using a resin binder is preferably used. It is preferred that the synthetic mica is present in an amount of 0.5 to 20.0 % by weight and the natural mica is present in an amount of 5.0 to 20.0 % by weight, based on the weight of the biodegradable resin.

Generally, housings and structural members for electric appliances prepared by shaping by, for example, injection molding a biodegradable resin as such has only a low mechanical strength. Therefore, these are likely to suffer deformation during mechanical processing, and thus it has been difficult to produce housings and the like having desired forms and structures in high yield. Further, even though the above housings and the like suffer no deformation during mechanical processing, they have a drawback that they are likely to suffer deformation after being stored at a high temperature or when used at a high temperature.

In contrast, in the method for improving elastic modulus of the present invention, a biodegradable resin material is irradiated with a microwave for an appropriate time to improve the mechanical strength (elastic modulus). The housings and structural members produced from the biodegradable resin material irradiated with a microwave are improved in size stability and form stability in high-temperature storage and unlikely to suffer warpage and change in size at high temperatures.

The biodegradable resin composition of the present invention is characterized in that it comprises a biodegradable resin and natural mica. As the natural mica, preferred is agglomerated mica obtained by granulation of natural mica using an acrylic resin, an epoxy resin, or a urethane resin as a binder. It is desired that the composition contains 5.0 to 30.0 % by weight of the natural mica, and that the natural mica has an average particle diameter of 15 to 140 µm. Representative examples of biodegradable resins include aliphatic polyester resins, and specific examples of the aliphatic polyester resins include polylactic acid.

Generally, housings and structural members for electric appliances prepared by shaping by, for example, injection molding a biodegradable resin as such has only a low mechanical strength. Therefore, these are likely to suffer deformation during mechanical processing, and thus it has been difficult to produce housings and the like having desired forms and structures in high yield. Further, even though the above housings and the like suffer no deformation during mechanical processing, they have a drawback that they are likely to suffer deformation after being stored at a high temperature or when used at a high temperature.

In contrast, the biodegradable resin composition of the present invention has incorporated thereinto natural mica as a component for reinforcing the biodegradable resin. Therefore, the biodegradable resin material is improved in mechanical strength (elastic modulus), and thus also improved in size stability and form stability in high-temperature storage, so that housings and structural members produced from the biodegradable resin material are unlikely to suffer warpage and change in size at high temperatures.

In the present invention, it is preferred that the biodegradable resin composition contains, in addition to natural mica, an additive for suppressing hydrolysis of the biodegradable resin. Preferred examples of the additives include carbodiimide compounds. It is desired that the additive is present in an amount of 0.1 to 2.0 % by weight, based on the weight of the aliphatic polyester resin.

In addition, the housing material of the present invention is characterized in that it comprises a biodegradable resin composition comprising a biodegradable resin and natural mica. It is preferred that the housing material further comprises an additive for suppressing hydrolysis of the biodegradable resin. As the biodegradable resin composition, any of the above-mentioned biodegradable resin compositions of the present invention can be used.

Further, the method for improving a biodegradable resin material in elastic modulus of the present invention is characterized in that the method comprises adding natural mica to the biodegradable resin material which is comprised mainly of a biodegradable resin. It is preferred that the addition of the natural mica is conducted by kneading together at 150 to 200°C the biodegradable resin material and the natural mica in an amount of 10.0 to 30.0 % by weight, based on the weight of the biodegradable resin material.

The biodegradable resin composition of the present invention is characterized in that it comprises synthetic mica as a crystal nucleating agent and an aliphatic polyester resin. It is desired that the synthetic mica is present in an amount of 0.5 to 20.0 % by weight, based on the weight of the aliphatic polyester resin. As an example of the aliphatic polyester resin, there can be mentioned polylactic acid. It is preferred that the synthetic mica is non-swellable synthetic mica. It is preferred that the synthetic mica has an average particle diameter of 1 to 10 µm.

Generally, housings and structural members for electric appliances prepared by shaping by, for example, injection molding a biodegradable resin as such has only a low mechanical strength. Therefore, these are likely to suffer deformation during mechanical processing, and thus it has been difficult to produce housings and the like having desired forms and structures in high yield. Further, even though the above housings and the like suffer no deformation during mechanical processing, they have a drawback that they are likely to suffer deformation after being stored at a high temperature or when used at a high temperature.

In contrast, the biodegradable resin composition of the present invention has incorporated thereinto synthetic mica as a component for reinforcing the biodegradable resin. Therefore, the biodegradable resin material is improved in mechanical strength (elastic modulus), and thus also improved in size stability and form stability in high-temperature storage, so that housings and structural members produced from the biodegradable resin material are unlikely to suffer warpage and change in size at high temperatures.

In the present invention, it is desired that the biodegradable resin composition further comprises an additive for suppressing hydrolysis of the biodegradable resin. As the additive for suppressing hydrolysis, a carbodiimide compound is preferred. It is preferred that the additive for suppressing hydrolysis is present in an amount of 0.1 to 2.0 % by weight, based on the weight of the aliphatic polyester resin.

Further, in the present invention, it is preferred that the biodegradable resin composition further comprises natural mica. It is preferred that the natural mica is present in an amount of 5.0 to 20.0 % by weight, based on the weight of the aliphatic polyester resin.

Further, the housing material of the present invention is characterized in that it comprises a biodegradable resin composition comprising synthetic mica as a crystal nucleating agent and an aliphatic polyester resin. In this case, as the biodegradable resin composition, any of those mentioned above can be employed.

Further, the method for producing a biodegradable resin composition of the present invention is characterized in that it comprises a step of kneading together at 150 to 200°C an aliphatic polyester resin and synthetic mica in an amount of 0.5 to 20.0 % by weight, based on the weight of the aliphatic polyester resin. As an example of the aliphatic polyester resin, there can be mentioned polylactic acid.

Further, the method for improving a biodegradable resin composition in elastic modulus is characterized in that the method comprises a step of allowing the biodegradable resin composition which comprises synthetic mica as a crystal nucleating agent and an aliphatic polyester resin to stand for 30 to 180 seconds while heating at 80 to 130°C. In this case, as the biodegradable resin composition, any of those mentioned above can be employed.

Further, the method for improving a biodegradable resin composition in elastic modulus of the present invention is characterized in that the method comprises steps of injecting the biodegradable resin composition which comprises synthetic mica as a crystal nucleating agent and an aliphatic polyester resin into a mold to form an injection-molded product, and then heating the injection-molded product in the mold at 80 to 130°C for 30 to 180 seconds. In this case, as the biodegradable resin composition, any of those mentioned above can be employed.

Further, the method for improving a biodegradable resin composition in elastic modulus of the present invention is characterized in that the method comprises a step of injecting the biodegradable resin composition which comprises synthetic mica as a crystal nucleating agent and an aliphatic polyester resin in an outer layer into a mold whose inner surface is heated by radio frequency induction heating to form an injection-molded product, and then, a step of heating the injection-molded product in the mold at 80 to 130°C for 30 to 180 seconds. In this case, as the biodegradable resin composition, any of those mentioned above can be employed.

The biodegradable resin composition of the present invention is characterized in that it comprises an aliphatic polyester resin, an organic nucleating agent, and natural mica. It is desired that the organic nucleating agent is at least one compound selected from the group consisting of an aliphatic carboxylic acid amide and an aliphatic carboxylic acid ester. It is preferred that the natural mica is present in an amount of 5.0 to 20.0 % by weight, based on the weight of the aliphatic polyester resin. It is preferred that the organic nucleating agent is present in an amount of 0.5 to 5.0 % by weight, based on the weight of the aliphatic polyester resin. As a specific preferred example of the aliphatic polyester resin, there can be mentioned polylactic acid.

Generally, housings and structural members for electric appliances prepared by shaping by, for example, injection molding a biodegradable resin as such has only a low mechanical strength. Therefore, these are likely to suffer deformation during mechanical processing, and thus it has been difficult to produce housings and the like having desired forms and structures in high yield. Further, even though the above housings and the like suffer no deformation during mechanical processing, they have a drawback that they are likely to suffer deformation after being stored at a high temperature or when used at a high temperature.

In contrast, the biodegradable resin composition of the present invention has incorporated thereinto an organic nucleating agent and natural mica as a component for reinforcing the biodegradable resin. Therefore, the biodegradable resin material is improved in mechanical strength (elastic modulus), and thus also improved in size stability and form stability in high-temperature storage, so that housings and structural members produced from the biodegradable resin material are unlikely to suffer warpage and change in size at high temperatures.

The biodegradable resin composition of the present invention is characterized in that it comprises an aliphatic polyester resin, an organic nucleating agent, natural mica, and an additive for suppressing hydrolysis of the aliphatic polyester resin. As the additive for suppressing hydrolysis, a carbodiimide compound is preferred. It is preferred that the additive for suppressing hydrolysis is present in an amount of 0.1 to 2.0 % by weight, based on the weight of the aliphatic polyester resin.

Further, the housing material of the present invention is characterized in that it comprises a biodegradable resin composition comprising an aliphatic polyester resin, an organic nucleating agent, and natural mica. In this case, as the biodegradable resin composition, any of those mentioned above can be employed.

Further, the method for producing a biodegradable resin composition of the present invention is characterized in that it comprises a step of kneading together at 150 to 200°C an aliphatic polyester resin, natural mica in an amount of 5.0 to 20.0 % by weight, based on the weight of the aliphatic polyester resin, and an organic nucleating agent.

Further, the method for improving a biodegradable resin composition in elastic modulus of the present invention is characterized in that the method comprises a step of allowing the biodegradable resin composition which comprises an aliphatic polyester resin, an organic nucleating agent, and natural mica to stand for 30 to 180 seconds while heating at 80 to 130°C. In this case, as the biodegradable resin composition, any of those mentioned above can be employed.

Further, the method for improving a biodegradable resin composition in elastic modulus of the present invention is characterized in that the method comprises a step of injecting the biodegradable resin composition which comprises an aliphatic polyester resin, an organic nucleating agent, and natural mica into a mold (using, for example, an extruder) to form an injection-molded product, and then, a step of heating the injection-molded product in the mold at 80 to 130°C for 30 to 180 seconds. In this case, as the biodegradable resin composition, any of those mentioned above can be employed.

Further, the method for improving a biodegradable resin composition in elastic modulus of the present invention is characterized in that the method comprises a step of injecting the biodegradable resin composition comprises an aliphatic polyester resin, an organic nucleating agent, and natural mica into a mold whose inner surface is heated by radio frequency induction heating to form an injection-molded product, and then, a step of heating the injection-molded product in the mold at 80 to 130°C for 30 to 180 seconds. In this case, as the biodegradable resin composition, any of those mentioned above can be employed.

### BRIEF DESCRIPTION OF THE DRAWINGS

The above and other objects, features and advantages of the present invention will become more apparent from the following description of the presently preferred exemplary embodiments of the invention taken in conjunction with the accompanying drawings, in which:

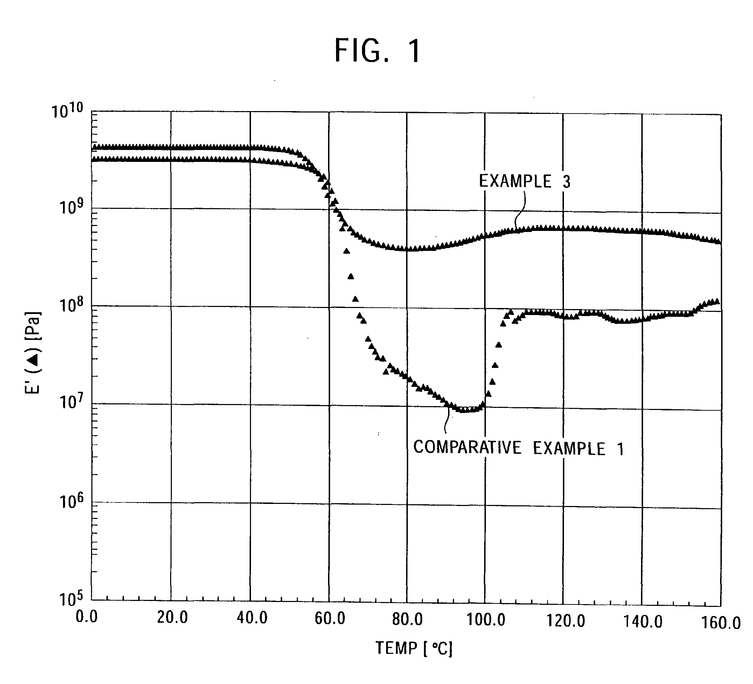

Fig. 1 is a graph showing the relationship between the temperature and the storage elastic modulus with respect to each of the biodegradable resin material comprised mainly of polylactic acid in Example of the present invention and that in Comparative Example;

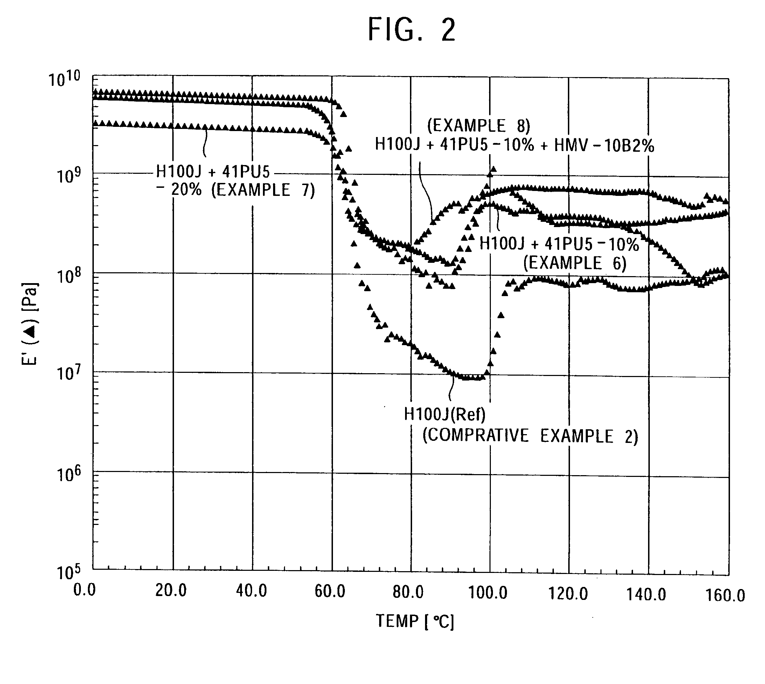

Fig. 2 is a graph showing the relationship between the temperature and the storage elastic modulus with respect to each of the biodegradable resin composition of the present invention (Examples), which is obtained by incorporating powdery natural mica into polylactic acid (H100J), and the biodegradable resin containing no natural mica (Comparative Example);

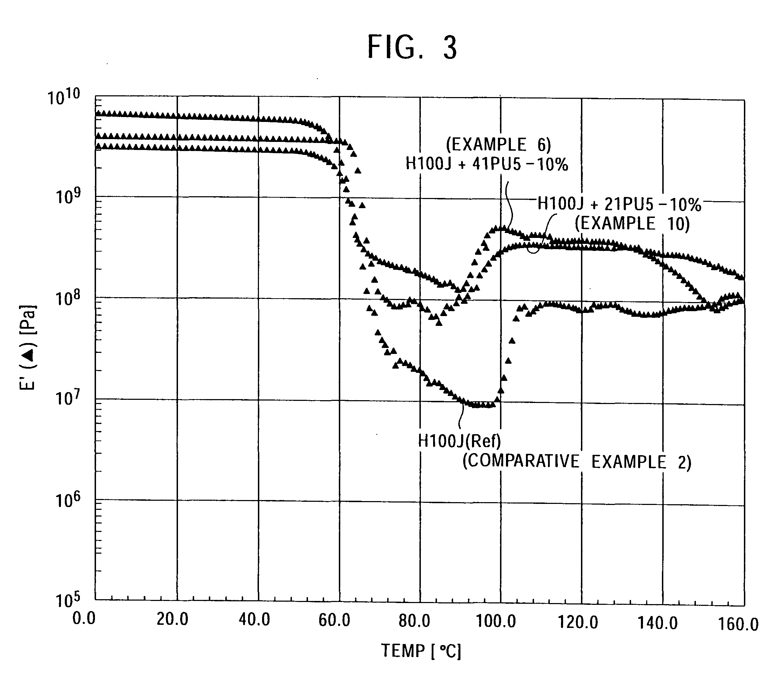

Fig. 3 is a graph showing the relationship between the temperature and the storage elastic modulus with respect to each of the biodegradable resin composition of the present invention (Examples), which is obtained by incorporating powdery natural mica into polylactic acid (H100J), and the biodegradable resin containing no natural mica (Comparative Example);

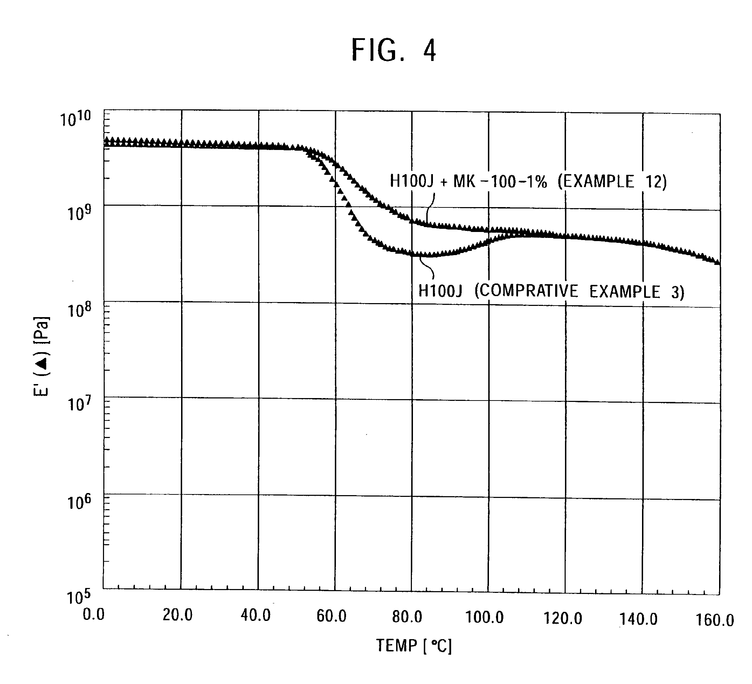

Fig. 4 is a graph showing the relationship between the temperature and the storage elastic modulus after aging at 120°C for 60 seconds with respect to each of the biodegradable resin composition of the present invention (Example), which is obtained by incorporating powdery synthetic mica (MK-100) into polylactic acid (H100J), and polylactic acid (H100J) containing no synthetic mica (Comparative Example);

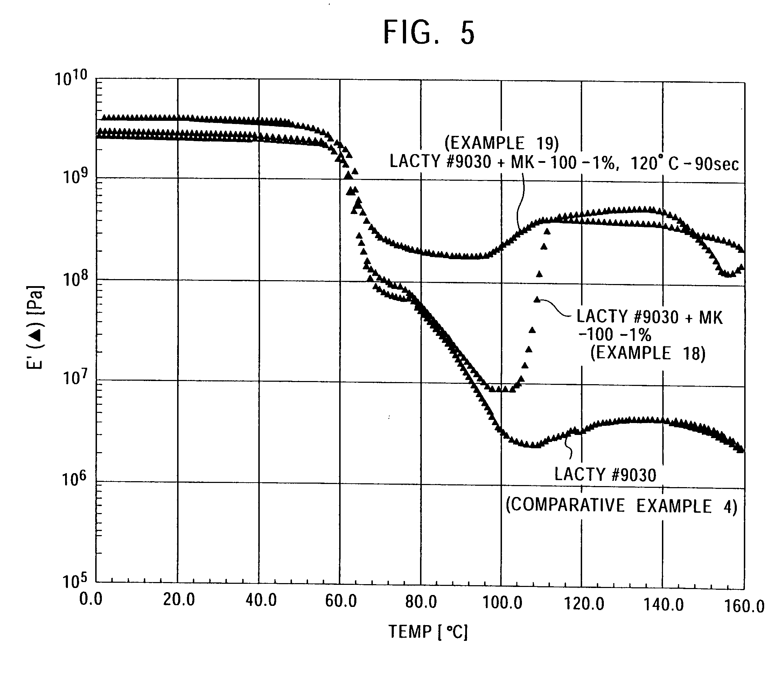

Fig. 5 is a graph showing the relationship between the temperature and the storage elastic modulus with respect to each of the biodegradable resin composition obtained by incorporating synthetic mica (MK-100) into polylactic acid (Lacty #9030) (Examples), and polylactic acid (Lacty #9030) containing no synthetic mica (Comparative Example);

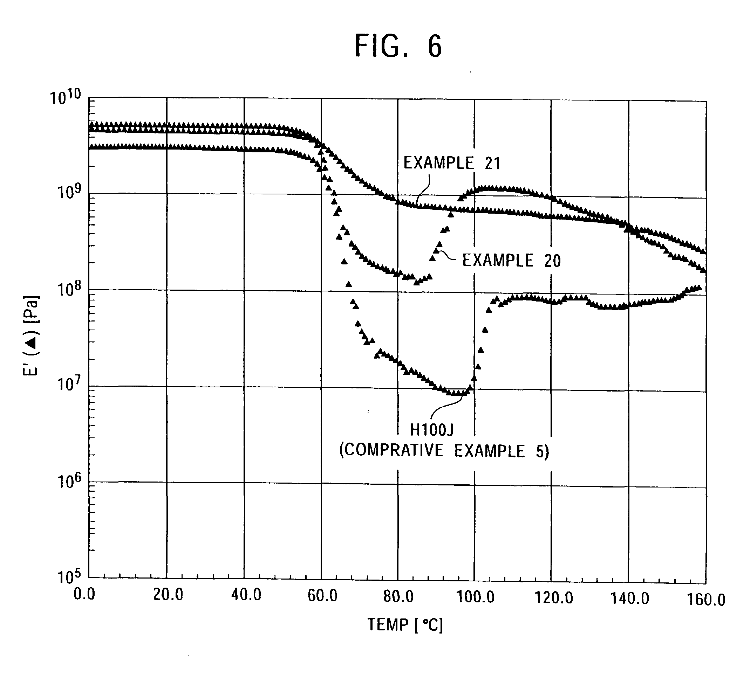

Fig. 6 is a graph showing the relationship between the temperature and the storage elastic modulus with respect to each of the biodegradable resin composition obtained by incorporating into polylactic acid an organic nucleating agent, natural mica, and an additive for suppressing hydrolysis of the polylactic acid (Examples 20 and 21), and polylactic acid containing no mica (Comparative Example 5); and

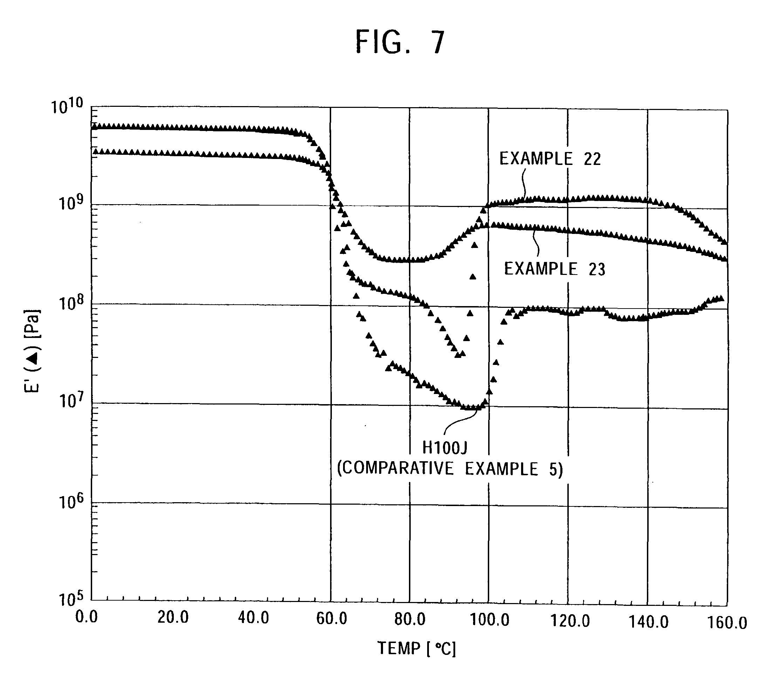

Fig. 7 is a graph showing the relationship between the temperature and the storage elastic modulus with respect to each of the biodegradable resin composition obtained by incorporating into polylactic acid an organic nucleating agent, natural mica, and an additive for suppressing hydrolysis of the polylactic acid (Examples 22 and 23), and polylactic acid containing no mica (Comparative Example 5).

### DETAILED DESCRIPTION OF THE PREFERRED EMBODIMENTS

In the present invention, a biodegradable resin material comprised mainly of a biodegradable resin is irradiated with a microwave, or a biodegradable resin material comprised mainly of a biodegradable resin is injected into a mold to form an injection-molded product, and then the biodegradable resin material in the form of the injection-molded product in the mold is irradiated with a microwave.

The irradiation of the material with a microwave generated from a magnetron vacuum tube is conducted for 1 to 10 minutes, preferably for 2 to 5 minutes. It is preferred that the biodegradable resin material used in the present invention is comprised mainly of an aliphatic polyester resin having excellent moldability and excellent heat resistance as well as excellent impact resistance, especially among the biodegradable resins capable of being metabolized by microorganisms.

As examples of the aliphatic polyester resin, there can be mentioned polylactic acid-based aliphatic polyester resins, and specific examples include polymers and copolymers of an oxy-acid or oxy-acids, such as lactic acid, malic acid, or/and gluconic acid, and particularly include hydroxycarboxylic acid-based aliphatic polyester resins, such as polylactic acid.

The polylactic acid-based aliphatic polyester resin can generally be obtained by a ring-opening polymerization of a lactide which is a cyclic diester or the corresponding lactone, i.e., a so-called lactide method, or by a method in which lactic acid is directly subjected to dehydration-condensation (lactic acid direct dehydration-condensation method).

Examples of catalysts for use in producing the polylactic acid-based aliphatic polyester resin include a tin compound, an antimony compound, a zinc compound, a titanium compound, an iron compound, and an aluminum compound. Among these compounds, preferred are a tin catalyst and an aluminum catalyst, and especially preferred are tin octylate and aluminum acetylacetate.

Among the polylactic acid-based aliphatic polyester resins, one that is obtained by lactide ring-opening polymerization is hydrolyzed by microorganisms into poly(L-form lactic acid), eventually into L-form lactic acid. L-form lactic acid is confirmed to be safe to human body, and hence the aliphatic polyester resin comprised of L-form lactic acid is preferred. However, the polylactic acid-based aliphatic polyester resin used in the present invention is not limited to this resin, and therefore the lactide used in the production of the resin is not limited to the L-form lactide.

As the additive for suppressing hydrolysis of the above-mentioned biodegradable aliphatic polyester resin used in the present invention, a compound having reactivity to a carboxylic acid and a hydroxyl group which are the terminal functional groups of a polyester resin, for example, a carbodiimide compound, an isocyanate compound, and an oxazoline compound can be used, and especially preferred is a carbodiimide compound since it can be well meld-kneaded with polyester and suppress hydrolysis even in a small amount.

As the carbodiimide compound having at least one carbodiimide group per molecule (including a polycarbodiimide compound), for example, there can be mentioned ones which can be synthesized by, using an organophosphorus compound or an organometal compound as a catalyst, subjecting an isocyanate polymer to decarboxylation-condensation reaction in the absence of a solvent or in an inert solvent at about 70°C or higher.

Examples of monocarbodiimide compounds contained in the above carbodiimide compound include dicyclohexylcarbodiimide, diisopropylcarbodiimide, dimethylcarbodiimide, diisobutylcarbodiimide, dioctylcarbodiimide, diphenylcarbodiimide, and naphthylcarbodiimide. Of these, preferred are dicyclohexylcarbodiimide and diisopropylcarbodiimide especially from the viewpoint of the commercial availability.

The carbodiimide compound can be mixed (incorporated) into a biodegradable plastic by melt-kneading using an extruder. The biodegradation rate of the biodegradable plastic used in the present invention can be adjusted by changing the type and amount of the carbodiimide compound incorporated, and hence, the type and amount of the carbodiimide compound are determined according to the desired product.

In the present invention, it is preferred that mica is further contained, and examples of mica include synthetic mica and natural mica. The synthetic mica is fluorine-containing mica obtained from talc as a raw material, and this mica is classified into swellable mica and non-swellable mica according to its behavior relative to water. The non-swellable synthetic mica is potassium-based fluorine mica in the form of fine powder having properties close to those of natural mica, and it has high heat resistance due to the fluorine contained, as compared to natural mica. In contrast, the swellable mica is sodium-based fluorine mica in the form of fine powder, and has properties such that it absorbs moisture in air to swell and then undergoes cleavage into fine ones. Further, the swellable mica has not only an ability to form a colloid and a film but also an ability to form a composite. It is desired that the synthetic mica used in the present invention is non-swellable synthetic mica. On the other hand, as natural mica, there is generally used one obtained by granulation of natural mica using a resin binder.

Next, the present invention will be described with reference to the following Examples and Comparative Examples. First, the methods for measuring a storage elastic modulus and a glass transition temperature (Tg) are described below.

Measuring apparatus: Viscoelasticity analyzer, manufactured and sold by Rheometric Scientific Inc.
Specimen size: length: 50 mm × width: 7 mm × thickness: 1 mm
Frequency: 6.28 (rad/s)
Starting temperature in measurement: 0°C
End temperature in measurement: 160°C
Heating rate: 5°C/min
Strain: 0.05 %

### Comparative Example 1

As shown in Fig. 1, in the measurement of the elastic modulus in flexure with respect to the specimen prepared from Lacea H100J (manufactured and sold by Mitsui Chemicals Co., Ltd.) which is polylactic acid, the storage elastic modulus E' was rapidly lowered at around the glass transition temperature Tg (60°C) of polylactic acid, and reached the minimum value at about 100°C. Then, the storage elastic modulus rapidly rose, and exhibited an almost constant value in a range of about 120 to 140°C.

### Example 1

Lacea H100J was subjected to aging for 3 minutes by irradiation with a microwave (microwave oven) generated from a magnetron vacuum tube, and, as a result, the storage elastic modulus of the specimen was considerably increased. Specifically, differing from Comparative Example 1, rapid lowering of the storage elastic modulus at around the Tg (60°C) of polylactic acid was not observed, and the storage elastic modulus at up to about 160°C exhibited an almost constant value.

### Example 2

Substantially the same treatment as that conducted in Example 1 was repeated except that 1 % by weight of Carbodilite HMV-10B (manufactured and sold by Nisshinbo Industries, Inc.) was added to Lacea H100J as an additive for suppressing hydrolysis. As a result, the storage elastic modulus of the specimen was considerably increased.

### Example 3

To Lacea H100J was added 1 % by weight of non-swellable synthetic mica MK-100 (manufactured and sold by CO-OP CHEMICAL CO., LTD.) and mixed together, and then melt-blended by means of a single-screw kneader set at 180°C and the resultant composition was pelletized, followed by hot-pressing by means of a hot pressing machine set at 170°C, thus preparing a plate material having a thickness of 1 mm. Then, a specimen cut out from the prepared plate material was subjected to aging for 2.5 minutes by irradiation with a microwave in substantially the same manner as in Example 1, and then, a storage elastic modulus was measured with respect to the resultant specimen. As a result, as shown in Fig. 1, rapid lowering of the storage elastic modulus of the specimen at around the Tg (60°C) of polylactic acid was not observed, and the storage elastic modulus in the range of about 70 to about 160°C was considerably increased and exhibited an almost constant value.

### Example 4

To Lacea H100J were added 1 % by weight of Carbodilite HMV-10B as an additive for suppressing hydrolysis and 1 % by weight of non-swellable synthetic mica MK-100 and mixed together, and then melt-blended by means of a single-screw kneader set at 180°C and the resultant composition was pelletized, followed by hot-pressing by means of a hot pressing machine set at 170°C, thus preparing a plate material having a thickness of 1 mm. Then, a specimen cut out from the prepared plate material was subjected to aging for 2.5 minutes by irradiation with a microwave in substantially the same manner as in Example 1, and then, a storage elastic modulus was measured with respect to the resultant specimen. As a result, the storage elastic modulus of the specimen was considerably increased.

### Example 5

To Lacea H100J were added 1 % by weight of Carbodilite HMV-10B as an additive for suppressing hydrolysis and 10 % by weight of natural mica 41PU (containing 0.8 % of an urethane resin binder; manufactured and sold by Yamaguchi Mica Industry Co., Ltd.) and mixed together, and then melt-blended by means of a single-screw kneader set at 180°C and the resultant composition was pelletized, followed by hot-pressing by means of a hot pressing machine set at 170°C, thus preparing a plate material having a thickness of 1 mm. Then, a specimen cut out from the prepared plate material was subjected to aging for 3 minutes by irradiation with a microwave in substantially the same manner as in Example 1, and then, a storage elastic modulus was measured with respect to the resultant specimen. As a result, the storage elastic modulus of the specimen was considerably increased.

In each of the above Examples, also when a pelletized biodegradable resin material was injected into a mold to form an injection-molded product, and then the biodegradable resin material in the form of the injection-molded product in the mold was irradiated with a microwave, the storage elastic modulus of the material was considerably increased.

In the method for improving a biodegradable resin material in elastic modulus of the present invention, a biodegradable resin material comprised mainly of a biodegradable resin is irradiated with a microwave. Therefore, the elastic modulus of the biodegradable resin material can be improved by a simple and convenient apparatus or process. As a result, the mechanical strength of the biodegradable resin material is increased, so that not only be the resin material unlikely to suffer deformation and warpage during mechanical processing, but also the resin material is improved in dimensional stability. For example, when the biodegradable resin material is comprised mainly of an aliphatic polyester resin, the storage elastic modulus (elastic modulus in flexure) of the resin material at 80°C is increased from about 1 × 10⁷ Pa to about 1 × 10⁹ Pa. In addition, the biodegradable resin material improved in storage elastic modulus suffers no deformation even in an aging test at 80°C at 80 % RH for 100 hours. Therefore, the biodegradable resin material improved in storage elastic modulus by the method of the present invention can be used as a material effective for producing housings having a satisfactory mechanical strength for household electric appliances and electronic equipment.

Further, in molded articles, such as housings, comprising the biodegradable resin material improved in storage elastic modulus by the method of the present invention, there are many waste disposal methods, and, even when used articles are disposed of as such, they cannot remain as waste for a long term and do not deteriorate the sight at which they are placed. Alternatively, they can be recycled as a material like general resins. Further, the biodegradable resin material in the present invention does not contain an injurious substance, such as a heavy metal or an organochlorine compound. Therefore, there is no danger that the biodegradable resin material generates an injurious substance after being disposed of or when incinerated. Furthermore, when the biodegradable resin constituting the biodegradable resin material is produced from grain resources as a raw material, the material also has an advantage in that it need not use resources being exhausted including petroleum.

In the method for improving a biodegradable resin material in elastic modulus of the present invention, a biodegradable resin material comprised mainly of a biodegradable resin is injected into a mold to form an injection-molded product, and then the biodegradable resin material in the form of the injection-molded product in the mold is irradiated with a microwave. Therefore, the elastic modulus of the biodegradable resin material can be improved by a simple apparatus or process.

In the method for improving a biodegradable resin material in elastic modulus of the present invention, the time for the irradiation of the biodegradable resin material with a microwave may be 1 to 10 minutes. When the time for the irradiation is shorter than 1 minute, the effect of improving the elastic modulus is unsatisfactory. On the other hand, when the time for the irradiation exceeds 10 minutes, the biodegradable resin material is heated to an excess extent and may suffer heat deterioration and thermal decomposition.

The method for improving a biodegradable resin material in elastic modulus of the present invention is applied to an aliphatic polyester resin. In the present invention, the biodegradable resin is an aliphatic polyester resin. Therefore, the biodegradable resin material improved in elastic modulus by the method of the present invention can be widely used not only in housings for household electric appliances and electronic equipment but also in materials for agriculture, forestry, and fisheries, materials for civil engineering works, and the field of packaging and container.

The method for improving a biodegradable resin material in elastic modulus of the present invention is applied to polylactic acid. Therefore, the method of the present invention has an advantage in that the hydrolysis product of the biodegradable resin material is especially highly safe.

The method for improving a biodegradable resin material in elastic modulus of the present invention is applied to a biodegradable resin material containing an additive for suppressing hydrolysis of the biodegradable resin. For this reason, by determining the type and amount of the additive for suppressing hydrolysis according to the application and properties of molded articles (products) to be produced from the biodegradable resin material, there can be provided a material for shaping comprised of a biodegradable resin material that meets various demands. Further, by incorporating into the resin material the above-mentioned additive for suppressing hydrolysis in an appropriate amount, the resin material is improved in chemical stability, for example, weathering resistance, light resistance, and heat resistance.

The method for improving a biodegradable resin material in elastic modulus of the present invention is applied to a biodegradable resin material containing, as the additive for suppressing hydrolysis, a carbodiimide compound which exhibits a remarkable effect only in a small amount. For this reason, by determining the type and amount of the carbodiimide compound according to the application and properties of molded articles (products) to be produced from the biodegradable resin material, there can be provided a material for shaping comprised of a biodegradable resin material that meets various demands.

The method for improving a biodegradable resin material in elastic modulus of the present invention is applied to a biodegradable resin material wherein the additive for suppressing hydrolysis of the aliphatic polyester resin is present in an amount of 0.1 to 2.0 % by weight, based on the weight of the aliphatic polyester resin. Therefore, not only be the effect of improving the resin material in elastic modulus at high temperatures especially remarkable, but also the resin material is improved in chemical stability, for example, weathering resistance, light resistance, and heat resistance. In addition, the compatibility between the aliphatic polyester resin as the biodegradable resin and the above-mentioned additive is enhanced, so that the mixing state of the material becomes stable. When the amount of the additive is less than 0.1 % by weight, the effect aimed at by addition of the additive is unsatisfactory, and, even when the amount of the additive exceeds 2.0 % by weight, the hydrolysis resistance effect is not further increased.

The method for improving a biodegradable resin material in elastic modulus of the present invention is applied to a biodegradable resin material containing mica; the method for improving elastic modulus of the present invention is also applied to the biodegradable resin material wherein the mica is synthetic mica; and the method for improving elastic modulus of the present invention is also applied to the biodegradable resin material wherein the mica is natural mica. The mica serves as a crystal nucleating agent for the biodegradable resin to improve the resin in elastic modulus. Therefore, by these inventions, an especially remarkable effect of improving elastic modulus can be obtained.

The method for improving a biodegradable resin material in elastic modulus of the present invention is applied to a biodegradable resin material wherein the synthetic mica is present in an amount of 0.5 to 20.0 % by weight, based on the weight of the biodegradable resin. Therefore, an effect of considerably improving the elastic modulus can be obtained due to the addition of the synthetic mica as well as the irradiation of the material with a microwave. When the amount of the synthetic mica is less than 0.5 % by weight, the effect of improving the elastic modulus aimed at by addition of the synthetic mica is unsatisfactory. On the other hand, when the amount of the synthetic mica exceeds 20.0 % by weight, the synthetic mica is difficult to be uniformly incorporated (uniformly kneaded) into the biodegradable resin, so that the effect of improving the elastic modulus is not further increased, and a molded article prepared from the resultant biodegradable resin material disadvantageously has a surface with poor smoothness.

The method for improving a biodegradable resin material in elastic modulus of the present invention is applied to a biodegradable resin material wherein the natural mica is present in an amount of 5.0 to 20.0 % by weight, based on the weight of the biodegradable resin. Therefore, an effect of considerably improving the elastic modulus can be obtained due to the addition of the natural mica as well as the irradiation of the material with a microwave. When the amount of the natural mica is less than 5.0 % by weight, the effect of improving the elastic modulus aimed at by addition of the natural mica is unsatisfactory. On the other hand, when the amount of the natural mica exceeds 20 % by weight, the natural mica is difficult to be uniformly incorporated (uniformly kneaded) into the biodegradable resin, so that the effect of improving the elastic modulus is not further increased, and a molded article prepared from the resultant biodegradable resin material disadvantageously has a surface with poor smoothness.

Next, the present invention will be described in more detail. As examples of the biodegradable plastic (biodegradable resin) constituting the biodegradable resin composition of the present invention, there can be mentioned polyester resins capable of being metabolized by microorganisms, and, of these, preferred are aliphatic polyester resins having excellent moldability and excellent heat resistance as well as excellent impact resistance.

For example, when natural mica in an appropriate amount is incorporated into polylactic acid which is a biodegradable resin, the storage elastic modulus of polylactic acid at 60°C or higher is increased from about 1 × 10⁷ Pa to about 1 × 10⁸ Pa.

As examples of the aliphatic polyester resin, there can be mentioned polylactic acid-based aliphatic polyester resins, and specific examples include polymers and copolymers of an oxy-acid or oxy-acids, such as lactic acid, malic acid, or/and gluconic acid, and particularly include hydroxycarboxylic acid-based aliphatic polyester resins, such as polylactic acid.

The polylactic acid-based aliphatic polyester resin can generally be obtained by a ring-opening polymerization of a lactide which is a cyclic diester or the corresponding lactone, i.e., a so-called lactide method, or by a method in which lactic acid is directly subjected to dehydration-condensation (lactic acid direct dehydration-condensation method).

Examples of catalysts for use in producing the polylactic acid-based aliphatic polyester resin include a tin compound, an antimony compound, a zinc compound, a titanium compound, an iron compound, and an aluminum compound. Among these compounds, preferred are a tin catalyst and an aluminum catalyst, and especially preferred are tin octylate and aluminum acetylacetate.

Among the polylactic acid-based aliphatic polyester resins, one that is obtained by lactide ring-opening polymerization is hydrolyzed by microorganisms into poly(L-form lactic acid), eventually into L-form lactic acid. L-form lactic acid is confirmed to be safe to human body, and hence the aliphatic polyester resin comprised of L-form lactic acid is preferred. However, the polylactic acid-based aliphatic polyester resin used in the present invention is not limited to this resin, and therefore the lactide used in the production of the resin is not limited to the L-form lactide.

As the additive for suppressing hydrolysis of the above-mentioned biodegradable polyester resin, a compound having reactivity to a carboxylic acid and a hydroxyl group which are the terminal functional groups of a polyester resin, for example, a carbodiimide compound, an isocyanate compound, and an oxazoline compound can be used, and especially preferred is a carbodiimide compound since it can be well meld-kneaded with the polyester resin and suppress hydrolysis even in a small amount.

As the carbodiimide compound having at least one carbodiimide group per molecule (including a polycarbodiimide compound), for example, there can be mentioned ones which can be synthesized by, using an organophosphorus compound or an organometal compound as a catalyst, subjecting an isocyanate polymer to decarboxylation-condensation reaction in the absence of a solvent or in an inert solvent at about 70°C or higher.

Examples of monocarbodiimide compounds contained in the above carbodiimide compound include dicyclohexylcarbodiimide, diisopropylcarbodiimide, dimethylcarbodiimide, diisobutylcarbodiimide, dioctylcarbodiimide, diphenylcarbodiimide, and naphthylcarbodiimide. Of these, preferred are dicyclohexylcarbodiimide and diisopropylcarbodiimide especially from the viewpoint of the commercial availability.

The carbodiimide compound can be mixed (incorporated) into a biodegradable plastic by melt-kneading using an extruder. The biodegradation rate of the biodegradable plastic used in the present invention can be adjusted by changing the type and amount of the carbodiimide compound incorporated, and hence, the type and amount of the carbodiimide compound are determined according to the desired product.

Next, the present invention will be described with reference to the following Examples and Comparative Examples. In the following Examples, natural mica was added to polylactic acid containing no additive to increase the storage elastic modulus of polylactic acid. Figs. 2 and 3 are graphs individually showing the relationship between the temperature and the storage elastic modulus with respect to each of the biodegradable resin composition obtained by incorporating natural mica in the form of powder into polylactic acid (H100J) (Examples) and the biodegradable resin containing no such natural mica (Comparative Example).

First, the methods for measuring a storage elastic modulus and a glass transition temperature (Tg) are described below. The methods are the same as those mentioned above.
Measuring apparatus: Viscoelasticity analyzer, manufactured and sold by Rheometric Scientific Inc.
Specimen size: length: 50 mm × width: 7 mm × thickness: 1 mm
Frequency: 6.28 (rad/s)
Starting temperature in measurement: 0°C
End temperature in measurement: 160°C
Heating rate: 5°C/min
Strain: 0.05 %

### Comparative Example 2

As shown in Fig. 2, in the measurement of the elastic modulus in flexure with respect to the specimen [corresponding to H100J (Ref) shown in Fig. 2] prepared from Lacea H100J (manufactured and sold by Mitsui Chemicals Co., Ltd.), which is polylactic acid and contains no natural mica, the storage elastic modulus E' was rapidly lowered at around the glass transition temperature Tg (60°C) of polylactic acid, and reached the minimum value at about 100°C. Then, the storage elastic modulus rapidly rose, and exhibited an almost constant value in the range of about 120 to 140°C.

### Example 6

By adding to Lacea H100J 10 % by weight of agglomerated mica powder 41PU5 having a particle diameter of 40 to 50µm (containing 0.8 % by weight of an urethane resin binder; manufactured and sold by Yamaguchi Mica Industry Co., Ltd.), which was obtained by granulation of natural mica, (corresponding to H100J + 41PU5-10% shown in Fig. 2), a considerable increase was observed in the storage elastic modulus E' of the specimen. In this Example, to Lacea H100J was added 10 % by weight of agglomerated mica powder 41PU5, and then melt-blended by means of a single-screw kneader set at 180°C and the resultant composition was pelletized, followed by hot-pressing by means of a hot pressing machine set at 170°C, thus preparing a plate material having a thickness of 1 mm. Then, a storage elastic modulus was measured with respect to the specimen cut out from the prepared plate material. The storage elastic modulus of this specimen was lowered at around the Tg of polylactic acid, but rapid lowering was not observed, as compared to that of the specimen containing no agglomerated mica powder.

### Example 7

Like in Example 6, by adding to Lacea H100J 20 % by weight of agglomerated mica powder 41PU5 having a particle diameter of 40 to 50µm (corresponding to H100J + 41PU5-20% shown in Fig. 2), a considerable increase was observed in the storage elastic modulus E'. The storage elastic modulus of this specimen was lowered at around the Tg of polylactic acid, but rapid lowering was not observed, as compared to that of the specimen containing no agglomerated mica powder. When the amount of the agglomerated mica powder 41PU5 added is increased to more than 20 % by weight, a similar increase in the storage elastic modulus is observed, but it is difficult to knead the mica with Lacea H100J, and pellets obtained from the resultant kneaded mixture have rough surfaces, so that a molded article produced from the pellets has a surface with poor smoothness. Therefore, it is preferred that the amount of the agglomerated mica powder added is not more than 20 % by weight.

### Example 8

To polylactic acid containing no additive were added 10 % by weight of agglomerated mica powder 41PU5 and 2 % by weight of Carbodilite HMV-10B (manufactured and sold by Nisshinbo Industries, Inc.) as an additive for suppressing hydrolysis, and then melt-blended by means of a twin-screw kneader set at 170°C and the resultant composition was pelletized, followed by hot-pressing by means of a hot pressing machine set at 170°C, thus preparing a plate material having a thickness of 1 mm. Then, a storage elastic modulus was measured with respect to the specimen cut out from the prepared plate material (corresponding to H100J + 41PU5-10% + HMV-10B-2% shown in Fig. 2). In this specimen, the hydrolysis of polylactic acid was suppressed due to addition of Carbodilite, and further, the storage elastic modulus at 100°C or higher was increased.

### Example 9

To polylactic acid containing no additive were added 10 % by weight of agglomerated mica powder 41PU5 and 0.5 % by weight of Carbodilite HMV-10B (manufactured and sold by Nisshinbo Industries, Inc.) as an additive for suppressing hydrolysis, and then melt-blended to prepare a composition, and a storage elastic modulus was measured in substantially the same manner as in Example 8. Like in Example 8, the hydrolysis of polylactic acid could be suppressed due to addition of Carbodilite, and further, the storage elastic modulus at 100°C or higher was increased.

### Example 10

Like in Example 6, by adding to Lacea H100J 10 % by weight of agglomerated mica powder 41PU5 having a particle diameter of 17 to 24 µm (corresponding to H100J + 21PU5-10% shown in Fig. 3), a considerable increase was observed in the storage elastic modulus. The storage elastic modulus of this specimen was lowered at around the Tg of polylactic acid, but rapid lowering was not observed, as compared to that of the specimen containing no agglomerated mica powder.

### Example 11

By adding to Lacea H100J 10 % by weight of agglomerated mica powder 21PA having a particle diameter of 17 to 24 µm (containing 0.8 % by weight of an acrylic resin binder; manufactured and sold by Yamaguchi Mica Industry Co., Ltd.), which was obtained by granulation of natural mica, a considerable increase was observed in the storage elastic modulus E'. The storage elastic modulus of this specimen was lowered at around the Tg of polylactic acid, but rapid lowering was not observed, as compared to that of the specimen containing no agglomerated mica powder.

By virtue of incorporating natural mica, the biodegradable resin composition of the present invention is improved in mechanical strength, so that not only be the composition unlikely to suffer deformation and warpage during mechanical processing, but also the composition is improved in dimensional stability. Therefore, from the biodegradable resin composition of the present invention, there can be provided a material for producing housings having a satisfactory mechanical strength for household electric appliances and electronic equipment. In addition, natural mica is a natural mineral, and it has no danger that it generates an injurious material, and further it is inexpensive and easily available. Thus, the biodegradable resin composition of the present invention can be produced at low cost.

The biodegradable resin composition of the present invention has incorporated thereinto, as the natural mica, agglomerated mica obtained by granulation of natural mica using an acrylic resin, an epoxy resin, or a urethane resin as a binder. The biodegradable resin and the agglomerated mica are efficiently kneaded and shaped by means of an injection molding machine or an extruder, and thus the agglomerated mica can be easily uniformly incorporated into the biodegradable resin, thus making it possible to provide a biodegradable resin composition having uniform properties.

In the biodegradable resin composition of the present invention, the amount of the natural mica is 5.0 to 30.0 % by weight. Therefore, not only can an effect of considerably improving the elastic modulus be obtained, but also molded articles (such as injection-molded articles and extruded articles) having smooth surfaces can be easily obtained from the biodegradable resin composition of the present invention. When the amount of the natural mica is less than 5.0 % by weight, the effect of improving the elastic modulus is unsatisfactory. On the other hand, when the amount of the natural mica exceeds 30 % by weight, a molded article produced from the resultant biodegradable resin composition has a surface with marked unevenness caused by the natural mica in the form of powder, and it is difficult to obtain a molded article having a smooth surface.

The biodegradable resin composition of the present invention has incorporated thereinto natural mica having an average particle diameter of 15 to 140 µm. Therefore, the natural mica can be efficiently kneaded and incorporated into the resin by means of an injection molding machine or an extruder, thus making it possible to provide a biodegradable resin composition having uniform properties. When natural mica having an average particle diameter of less than 15 µm is prepared, the cost is increased, and no special effect can be obtained by reducing the particle diameter of natural mica. On the other hand, when the particle diameter of the natural mica exceeds 140 µm, not only be the natural mica difficult to be kneaded with the biodegradable resin, but also a molded article produced from the resultant biodegradable resin composition disadvantageously has a surface with poor smoothness.

In the biodegradable resin composition of the present invention, the biodegradable resin is an aliphatic polyester resin. Therefore, the composition of the present invention can be widely used not only in housings for household electric appliances and electronic equipment but also in materials for agriculture, forestry, and fisheries, and materials for civil engineering works, and the field packaging and container. Further, in the biodegradable resin composition according to the present invention, polylactic acid is used as the aliphatic polyester resin, and therefore the composition has an advantage in that the hydrolysis product of the biodegradable resin composition is especially highly safe.

The biodegradable resin composition of the present invention contains, in addition to natural mica, an additive for suppressing hydrolysis of the biodegradable resin. For this reason, by determining the type and amount of the additive for suppressing hydrolysis according to the application and properties of molded articles (products) to be produced from the biodegradable resin composition, there can be provided a material for shaping comprised of a biodegradable resin composition that meets various demands. Further, by incorporating into the composition the above-mentioned additive for suppressing hydrolysis in an appropriate amount, the composition is improved in elastic modulus at high temperatures, especially at the glass transition temperature of the biodegradable resin or higher.

The biodegradable resin composition of the present invention contains, in addition to natural mica, as an additive for suppressing hydrolysis of the biodegradable resin, a carbodiimide compound which exhibits a remarkable effect in a small amount. For this reason, by determining the type and amount of the carbodiimide compound according to the application and properties of molded articles (products) to be produced from the biodegradable resin composition, there can be provided a material for shaping comprised of a biodegradable resin composition that meets various demands.

In the biodegradable resin composition of the present invention, the additive for suppressing hydrolysis is present in an amount of 0.1 to 2.0 % by weight, based on the weight of the aliphatic polyester resin as the biodegradable resin. Therefore, not only be the effect of improving the composition in elastic modulus at high temperatures especially remarkable, but also the compatibility between the biodegradable resin and the additive is enhanced, so that the mixing state of the composition becomes stable. When the amount of the additive is less than 0.1 % by weight, the effect aimed at by addition of the additive is unsatisfactory, and, even when the amount of the additive exceeds 2.0 % by weight, the hydrolysis resistance effect is not further increased.

The housing material of the present invention comprises a biodegradable resin composition which comprises a biodegradable resin having incorporated thereinto natural mica. Therefore, the housing material of the present invention can be a material for producing housings having a satisfactory mechanical strength for household electric appliances and electronic equipment. In addition, natural mica is a natural mineral, and it has no danger that it generates an injurious material, and further it is inexpensive and easily available. Thus, the housing material of the present invention can be produced at low cost.

The housing material of the present invention contains a biodegradable resin, natural mica, and an additive for suppressing hydrolysis of the biodegradable resin. Therefore, the material can has satisfactory mechanical strength and high elastic modulus at high temperatures. Thus, from the housing material of the present invention, there can be produced housings for household electric appliances and electronic equipment, which are unlikely to suffer deformation by external force and have excellent heat resistance. Further, by determining the type and amount of the additive for suppressing hydrolysis according to the application and properties of molded articles (products) to be produced from the biodegradable resin composition, there can be provided a housing that meets various demands.

The method for improving a biodegradable resin material in elastic modulus of the present invention is characterized in that it comprises a step of adding natural mica to a biodegradable resin material comprised mainly of a biodegradable resin. Therefore, by the method for improving elastic modulus of the present invention, there can be provided a biodegradable resin material having improved mechanical strength.

In the method for improving a biodegradable resin material in elastic modulus of the present invention, a biodegradable resin material comprised mainly of a biodegradable resin and natural mica in an amount of 10.0 to 30.0 % by weight, with regard to the weight of the biodegradable resin material, are kneaded together at 150 to 200°C to incorporate the natural mica into the biodegradable resin material. Therefore, not only can an effect of considerably improving the elastic modulus be obtained, but also the natural mica and the biodegradable resin can be uniformly kneaded, so that a biodegradable resin material having uniform properties can be easily obtained. By shaping the resultant biodegradable resin material by injection molding or the like, molded articles (such as injection-molded articles and extruded articles) having excellent properties can be stably produced. When the temperature for the above kneading is lower than 150°C, the kneading is unsatisfactory. On the other hand, when the kneading temperature exceeds 200°C, the biodegradable resin is likely to suffer thermal decomposition.

In the housing produced from a housing material using the biodegradable resin composition of the present invention, there are many waste disposal methods, and, even when used articles are disposed of as such, they cannot remain as waste for a long term and do not destroy the scenery at which they are placed. Alternatively, they can be recycled as a material like general resins. Further, the biodegradable resin composition of the present invention does not contain an injurious substance, such as a heavy metal or an organochlorine compound. Therefore, there is no danger that the biodegradable resin composition generates an injurious substance after being disposed of or when incinerated. Furthermore, when the biodegradable resin is produced from grain resources as a raw material, the material also has an advantage in that it need not use resources being exhausted including petroleum.

Further, the present invention will be described in detail. The biodegradable resin used in the present invention is an aliphatic polyester resin having excellent moldability and excellent heat resistance as well as excellent impact resistance, among the polyester resins capable of being metabolized by microorganisms.

As examples of the aliphatic polyester resin, there can be mentioned polylactic acid-based aliphatic polyester resins, and specific examples include polymers and copolymers of an oxy-acid or oxy-acids, such as lactic acid, malic acid, or/and gluconic acid, and particularly include hydroxycarboxylic acid-based aliphatic polyester resins, such as polylactic acid.

The polylactic acid-based aliphatic polyester resin can generally be obtained by a ring-opening polymerization of a lactide which is a cyclic diester or the corresponding lactone, i.e., a so-called lactide method, or by a method in which lactic acid is directly subjected to dehydration-condensation (lactic acid direct dehydration-condensation method).

Examples of catalysts for use in producing the polylactic acid-based aliphatic polyester resin include a tin compound, an antimony compound, a zinc compound, a titanium compound, an iron compound, and an aluminum compound. Among these compounds, preferred are a tin catalyst and an aluminum catalyst, and especially preferred are tin octylate and aluminum acetylacetate.

Among the polylactic acid-based aliphatic polyester resins, one that is obtained by lactide ring-opening polymerization is hydrolyzed by microorganisms into poly(L-form lactic acid), eventually into L-form lactic acid. L-form lactic acid is confirmed to be safe to human body, and hence the aliphatic polyester resin comprised of L-form lactic acid is preferred. However, the polylactic acid-based aliphatic polyester resin used in the present invention is not limited to this resin, and therefore the lactide used in the production of the resin is not limited to the L-form lactide.

On the other hand, the synthetic mica used in the present invention is fluorine-containing mica obtained from talc as a raw material, and this mica is classified into swellable mica and non-swellable mica according to its behavior relative to water. The non-swellable synthetic mica is potassium-based fluorine mica in the form of fine powder having properties close to those of natural mica, and it has high heat resistance due to the fluorine contained, as compared to natural mica. In contrast, the swellable mica is sodium-based fluorine mica in the form of fine powder, and has properties such that it absorbs moisture in air to swell and then undergoes cleavage into fine ones. Further, the swellable mica has not only an ability to form a colloid and a film but also an ability to form a composite. It is desired that the synthetic mica used in the present invention is non-swellable synthetic mica.

As the additive for suppressing hydrolysis of the above-mentioned biodegradable aliphatic polyester resin, a compound having reactivity to a carboxylic acid and a hydroxyl group which are the terminal functional groups of a polyester resin, for example, a carbodiimide compound, an isocyanate compound, and an oxazoline compound can be used, and especially preferred is a carbodiimide compound since it can be well meld-kneaded with polyester and suppress hydrolysis even in a small amount.

As the carbodiimide compound having at least one carbodiimide group per molecule (including a polycarbodiimide compound), for example, there can be mentioned ones which can be synthesized by, using an organophosphorus compound or an organometal compound as a catalyst, subjecting an isocyanate polymer to decarboxylation-condensation reaction in the absence of a solvent or in an inert solvent at about 70°C or higher.

Examples of monocarbodiimide compounds contained in the above carbodiimide compound include dicyclohexylcarbodiimide, diisopropylcarbodiimide, dimethylcarbodiimide, diisobutylcarbodiimide, dioctylcarbodiimide, diphenylcarbodiimide, and naphthylcarbodiimide. Of these, preferred are dicyclohexylcarbodiimide and diisopropylcarbodiimide especially from the viewpoint of the commercial availability.

The carbodiimide compound can be mixed (incorporated) into a biodegradable plastic by melt-kneading using an extruder. The biodegradation rate of the biodegradable plastic used in the present invention can be adjusted by changing the type and amount of the carbodiimide compound incorporated, and hence, the type and amount of the carbodiimide compound are determined according to the desired product.

Next, the present invention will be described with reference to the following Examples and Comparative Examples. In the following Examples, synthetic mica was added to polylactic acid containing no additive to improve the polylactic acid in storage elastic modulus. Fig. 4 is a graph showing the relationship between the temperature and the storage elastic modulus with respect to each of the biodegradable resin composition obtained by incorporating synthetic mica (MK-100) into polylactic acid (H100J)(Example 12), and polylactic acid (H100J) containing no synthetic mica (Comparative Example 3), each of which was subjected to aging at 120°C for 60 seconds. Fig. 5 is a graph showing the relationship between the temperature and the storage elastic modulus in the Examples of the present invention and Comparative Example with respect to each of the biodegradable resin composition obtained by incorporating synthetic mica (MK-100) into polylactic acid (Lacty #9030)(Examples 18 and 19), and polylactic acid (Lacty #9030) containing no such synthetic mica (Comparative Example 4).

First, the methods for measuring a storage elastic modulus and a glass transition temperature (Tg) are described below. The measuring apparatus and conditions for measurement are the same as those mentioned above.

Measuring apparatus: Viscoelasticity analyzer, manufactured and sold by Rheometric Scientific Inc.
Specimen size: length: 50 mm × width: 7 mm × thickness: 1 mm
Frequency: 6.28 (rad/s)
Starting temperature in measurement: 0°C
End temperature in measurement: 160°C
Heating rate: 5°C/min
Strain: 0.05 %

### Comparative Example 3

In the measurement of the elastic modulus in flexure with respect to the specimen prepared from Lacea H100J (manufactured and sold by Mitsui Chemicals Co., Ltd.), which is polylactic acid and contains no synthetic mica, the storage elastic modulus E' was rapidly lowered at around the glass transition temperature Tg (60°C) of polylactic acid, and reached the minimum value at about 100°C. Then, the storage elastic modulus rapidly rose, and exhibited an almost constant value in the range of about 120 to 140°C (not shown). The specimen prepared from Lacea H100J was subjected to aging for 60 seconds by heating at 120°C. As a result, as shown in Fig. 4 (H100J), the storage elastic modulus of the specimen at the Tg (60°C) of polylactic acid or higher could be kept at 1 × 10⁸ Pa or more.

### Example 12

To Lacea H100J was added 1 % by weight of Micromica MK-100 (manufactured and sold by CO-OP CHEMICAL CO., LTD.), which is synthetic mica in the form of fine powder, and then melt-blended by means of a single-screw kneader set at 180°C and the resultant composition was pelletized, followed by hot-pressing by means of a hot pressing machine set at 170°C, thus preparing a plate material having a thickness of 1 mm. Then, a specimen cut out from the prepared plate material was subjected to aging for 60 seconds by heating at 120°C, and then, a storage elastic modulus was measured with respect to the resultant specimen. As shown in Fig. 4 (H100J + MK-100-1%), an increase (to about 1 × 10⁹ Pa) was observed in the storage elastic modulus of this specimen in the range of around the Tg (60°C) of polylactic acid to 100°C.

### Example 13

To Lacea H100J was added 1 % by weight of Carbodilite HMV-10B (manufactured and sold by Nisshinbo Industries, Inc.) as an additive for suppressing hydrolysis, and 1 % by weight of non-swellable Micromica MK-100, which is synthetic mica in the form of fine powder, was further added thereto and then meld-blended. Subsequently, a specimen comprising a biodegradable resin composition was prepared in substantially the same manner as in Example 1. The prepared specimen was subjected to aging for 60 seconds by heating at 120°C, and then, a storage elastic modulus was measured with respect to the resultant specimen. An increase was observed in the storage elastic modulus of this specimen in the range of around the Tg (60°C) of polylactic acid to 100°C (not shown).

### Example 14

To Lacea H100J were added 10 % by weight of natural mica and 1 % by weight of Carbodilite HMV-10B as an additive for suppressing hydrolysis in substantially the same manner as in Example 12, and 1 % by weight of non-swellable Micromica MK-100, which is synthetic mica in the form of fine powder, was further added thereto and then meld-blended. Subsequently, a specimen comprising a biodegradable resin composition was prepared in substantially the same manner as in Example 12. The prepared specimen was subjected to aging for 60 seconds by heating at 120°C, and then, a storage elastic modulus was measured with respect to the resultant specimen. An increase was observed in the storage elastic modulus of this specimen in the range of around the Tg (60°C) of polylactic acid to 100°C (not shown).

### Example 15

The specimens prepared in Examples 12 to 14 were individually subjected to aging for 90 seconds by heating at 100°C, and then, a storage elastic modulus was measured with respect to each of the resultant specimens. As a result, an increase was observed in the storage elastic modulus of these specimens in the range of around the Tg (60°C) of polylactic acid to 100°C at substantially the same level as that in a case where the specimen is subjected to aging for 60 seconds by heating at 120°C (not shown).

### Example 16

To Lacea H100J was added 1 % by weight of Carbodilite HMV-10B, and 1 % by weight of non-swellable Micromica MK-100, which is synthetic mica in the form of fine powder, was further added thereto and then melt-blended, followed by pelletization. The resultant pellets were injected into a mold to obtain an injection-molded product, and then the mold was heated at 120°C for 60 seconds so that the injection-molded product was subjected to aging. Then, the injection-molded product was removed from the mold, and a specimen was cut out from the injection-molded product, and a storage elastic modulus was measured with respect to the specimen. As a result, an increase was observed in the storage elastic modulus of the specimen in the range of around the Tg (60°C) of polylactic acid to 100°C (not shown).

### Example 17

To Lacea H100J was added 1 % by weight of Carbodilite HMV-10B, and 1 % by weight of non-swellable Micromica MK-100, which is synthetic mica in the form of fine powder, was further added thereto and then melt-blended, followed by pelletization. The extruder of the injection molding machine [BSM apparatus; manufactured and sold by ASAHI ENGINEERING CO., LTD.] was set at 180°C, and the inner surface of a mold was rapidly heated to 120°C by radio frequency induction heating using a coil. The above-obtained pellets were melted at 180°C, and then injected into the above mold, followed by slow cooling of the mold. Thus, by heating the injection-molded product in the mold to 120°C, aging was affected to the injection-molded product. Therefore, a considerable increase was observed in the storage elastic modulus of the specimen cut out from the above injection-molded product (not shown).

### Comparative Example 4

As shown in Fig. 5, the storage elastic modulus of Lacty #9030 (manufactured and sold by Shimadzu Corporation) which is polylactic acid was rapidly lowered at around the Tg (60°C) of polylactic acid, and reached the minimum value, i.e., 2.8 × 10⁶ Pa at about 100°C, and then was kept at about 4 × 10⁶ Pa at up to 160°C. Then, the specimen of Lacty #9030 prepared by shaping into a plate material at 170°C was subjected to aging by heating at 120°C, but no effect was obtained by the aging.

### Example 18

To Lacty #9030 was added 1 % by weight of non-swellable Micromica MK-100, which is synthetic mica in the form of fine powder, and then melt-blended by means of a single-screw kneader set at 180°C, followed by pelletization. A plate material specimen (without undergoing no aging by heating) was obtained from the resultant pellets by shaping at 170°C, and a storage elastic modulus was measured with respect to the specimen. As a result, as shown in Fig. 5 (Lacty #9030 + MK-100-1%), an increase (to 1 × 10⁸ Pa or more) was observed in the storage elastic modulus of the specimen in the range of about 120 to 160°C.

### Example 19

The plate material specimen prepared in Example 18 was subjected to aging at 120°C for 90 seconds. As a result, as shown in Fig. 5 (Lacty #9030 + MK-100-1%, 120°C · 90 sec), an increase (to 1 × 10⁸ Pa or more) was observed in the storage elastic modulus of the specimen in the range of 60 to 160°C.

The biodegradable resin composition of the present invention comprises an aliphatic polyester resin having incorporated thereinto synthetic mica, and the synthetic mica is used as a crystal nucleating agent. Therefore, in the biodegradable resin composition of the present invention, the crystallinity of the aliphatic polyester resin is high, and thus the mechanical strength of the composition is increased, so that not only be the composition unlikely to suffer deformation and warpage during mechanical processing, but also the composition is improved in dimensional stability. Thus, from the biodegradable resin composition of the present invention, there can be provided a material for producing housings having a satisfactory mechanical strength for household electric appliances and electronic equipment. Specifically, the biodegradable resin used in the composition of the present invention is an aliphatic polyester resin, and hence the composition can be widely used not only in housings for household electric appliances and electronic equipment but also in materials for agriculture, forestry, and fisheries, and materials for civil engineering works, and the field of packaging and container. Further, the synthetic mica is in the form of fine powder, and therefore can be easily uniformly incorporated into the aliphatic polyester resin, thus making it possible to produce biodegradable resin compositions having uniform quality in high yield. The biodegradable resin composition can be easily shaped into molded articles having desired forms by means of an injection molding machine or an extruder.

In the biodegradable resin composition of the present invention, the amount of the synthetic mica incorporated is 0.5 to 20.0 % by weight. Therefore, an effect of considerably improving the elastic modulus can be obtained. When the amount of the synthetic mica is less than 0.5 % by weight, the effect of improving the elastic modulus is unsatisfactory. On the other hand, when the amount of the synthetic mica exceeds 20.0 % by weight, the effect of improving the elastic modulus is not further increased, and the synthetic mica is difficult to be uniformly incorporated into the biodegradable resin.

In the biodegradable resin composition of the present invention, polylactic acid is used as the aliphatic polyester resin. Therefore, the composition has an advantage in that the hydrolysis product of the biodegradable resin composition is especially highly safe.

The biodegradable resin composition of the present invention has incorporated thereinto non-swellable synthetic mica. The non-swellable synthetic mica is potassium-based fluorine mica in the form of fine powder having properties close to those of natural mica, and it has high heat resistance due to the fluorine contained, as compared to natural mica. Therefore, from the biodegradable resin composition of the present invention, there can be provided a molded article, such as a housing, having excellent heat resistance.

The biodegradable resin composition of the present invention has incorporated thereinto synthetic mica having an average particle diameter of 1 to 10 µm. Therefore, the synthetic mica can be efficiently kneaded and incorporated into the resin by means of an injection molding machine or an extruder, thus making it possible to provide a biodegradable resin composition having uniform properties. When synthetic mica having an average particle diameter of less than 1 µm is prepared, the cost is increased, and no special effect can be obtained by reducing the particle diameter of the synthetic mica. On the other hand, when the particle diameter of the synthetic mica exceeds 10 µm, not only be the synthetic mica difficult to be kneaded with the biodegradable resin, but also a molded article produced from the resultant biodegradable resin composition disadvantageously has a surface with poor smoothness.

The biodegradable resin composition of the present invention has incorporated thereinto synthetic mica and an additive for suppressing hydrolysis of the biodegradable resin. For this reason, by determining the type and amount of the additive for suppressing hydrolysis according to the application and properties of molded articles (products) to be produced from the biodegradable resin composition, there can be provided a material for shaping comprised of a biodegradable resin composition that meets various demands. Further, by incorporating into the composition the above-mentioned additive for suppressing hydrolysis in an appropriate amount, the composition is improved in elastic modulus at high temperatures, especially at the glass transition temperature of the biodegradable resin or higher.

The biodegradable resin composition of the present invention has incorporated thereinto synthetic mica and, as an additive for suppressing hydrolysis, a carbodiimide compound which exhibits a remarkable effect in a small amount. For this reason, by determining the type and amount of the carbodiimide compound according to the application and properties of molded articles (products) to be produced from the biodegradable resin composition, there can be provided a material for shaping comprised of a biodegradable resin composition that meets various demands.

In the biodegradable resin composition of the present invention, the additive for suppressing hydrolysis of the biodegradable resin is present in an amount of 0.1 to 2.0 % by weight, with regard to the weight of the aliphatic polyester resin. Therefore, not only be the effect of improving the composition in elastic modulus at high temperatures especially remarkable, but also the compatibility between the biodegradable resin and the additive is enhanced, so that the mixing state of the composition becomes stable. When the amount of the additive is less than 0.1 % by weight, the effect aimed at by addition of the additive is unsatisfactory, and, even when the amount of the additive exceeds 2.0 % by weight, the hydrolysis resistance effect is not further increased.

The biodegradable resin composition of the present invention is obtained by incorporating synthetic mica and natural mica into an aliphatic polyester resin, and has a form such that the surface of the mica as a crystal nucleating agent is covered with the aliphatic polyester resin. Therefore, this composition is further improved in mechanical strength, and the composition is unlikely to suffer deformation and warpage during mechanical processing.

In the biodegradable resin composition of the present invention obtained by incorporating into an aliphatic polyester resin synthetic mica and natural mica, the natural mica is present in an amount of 5.0 to 20.0 % by weight, with regard to the weight of the aliphatic polyester resin. Therefore, the composition is remarkably improved in mechanical strength. When the amount of the natural mica is less than 5.0 % by weight, the effect aimed at by addition of the natural mica is unsatisfactory. On the other hand, when the amount of the natural mica exceeds 20.0 % by weight, the effect of improving the elastic modulus is not further increased, and a molded article produced from the resultant biodegradable resin composition has a surface with marked unevenness caused by the natural mica in the form of powder, so that it is difficult to obtain a molded article having a smooth surface.

The housing material of the present invention comprises a biodegradable resin composition comprising an aliphatic polyester resin having incorporated thereinto synthetic mica wherein the synthetic mica is used as a crystal nucleating agent. Therefore, the housing material of the present invention can be a material for producing housings having a satisfactory mechanical strength for household electric appliances and electronic equipment. Further, in the housing produced from a housing material using the biodegradable resin composition of the present invention, there are many waste disposal methods, and, even when used articles are disposed of as such, they cannot remain as waste for a long term and do not deteriorate the sight at which they are placed. Alternatively, they can be recycled as a material like general resins. Further, the biodegradable resin composition of the present invention does not contain an injurious substance, such as a heavy metal or an organochlorine compound. Therefore, there is no danger that the biodegradable resin composition generates an injurious substance after being disposed of or when incinerated. Furthermore, when the biodegradable resin is produced from grain resources as a raw material, the material also has an advantage in that it need not use resources being exhausted including petroleum.

The method for producing a biodegradable resin composition of the present invention is characterized in that it comprises a step of kneading together at 150 to 200°C an aliphatic polyester resin and synthetic mica in an amount of 0.5 to 20.0 % by weight, with regard to the weight of the aliphatic polyester resin. By the production method of the present invention, the synthetic mica and the polyester resin can be uniformly kneaded, so that a biodegradable resin composition having uniform properties and having remarkably improved elastic modulus can be easily obtained by a simple and convenient kneading apparatus or process. By shaping the resultant biodegradable resin material by injection molding or the like, molded articles (such as injection-molded articles and extruded articles) having excellent properties can be stably produced. When the temperature for the above kneading is lower than 150°C, the kneading is unsatisfactory. On the other hand, when the kneading temperature exceeds 200°C, the biodegradable resin is likely to suffer thermal decomposition.

In the method for improving a biodegradable resin material in elastic modulus of the present invention, the biodegradable resin composition comprises an aliphatic polyester resin having incorporated thereinto synthetic mica, wherein the synthetic mica is used as a crystal nucleating agent, and the biodegradable resin composition is allowed to stand for 30 to 180 seconds while heating at 80 to 130°C (aging). Therefore, in the method of the present invention, the effect of improving the elastic modulus is further increased, as compared to the effect obtained in the case where no aging is conducted.

In the method for improving a biodegradable resin material in elastic modulus of the present invention, the biodegradable resin composition comprises an aliphatic polyester resin having incorporated thereinto synthetic mica, wherein the synthetic mica is used as a crystal nucleating agent, and the biodegradable resin composition is injected into a mold to form an injection-molded product, and then the injection-molded product in the mold is heated at 80 to 130°C for 30 to 180 seconds. In addition, in the method for improving elastic modulus of the present invention, the above-mentioned biodegradable resin composition is injected into a mold whose inner surface is heated by radio frequency induction heating to form an injection-molded product, and then the injection-molded product in the mold is heated at 80 to 130°C for 30 to 180 seconds. Therefore, each method for improving elastic modulus of the present invention can be practiced by a simple process.

Hereinbelow, the present invention will be described in more detail. The biodegradable resin composition of the present invention is comprised mainly of an aliphatic polyester resin having excellent moldability and excellent heat resistance as well as excellent impact resistance among the polyester resins capable of being metabolized by microorganisms. Further, as the natural mica, agglomerated mica obtained by granulation of natural mica using an acrylic resin, an epoxy resin, or a urethane resin as a binder is generally used.

As examples of the aliphatic polyester resin, there can be mentioned polylactic acid-based aliphatic polyester resins, and specific examples include polymers and copolymers of an oxy-acid or oxy-acids, such as lactic acid, malic acid, or/and gluconic acid, and particularly include hydroxycarboxylic acid-based aliphatic polyester resins, such as polylactic acid.

The polylactic acid-based aliphatic polyester resin can generally be obtained by a ring-opening polymerization of a lactide which is a cyclic diester or the corresponding lactone, i.e., a so-called lactide method, or by a method in which lactic acid is directly subjected to dehydration-condensation (lactic acid direct dehydration-condensation method).

Examples of catalysts for use in producing the polylactic acid-based aliphatic polyester resin include a tin compound, an antimony compound, a zinc compound, a titanium compound, an iron compound, and an aluminum compound. Among these compounds, preferred are a tin catalyst and an aluminum catalyst, and especially preferred are tin octylate and aluminum acetylacetate.

Among the polylactic acid-based aliphatic polyester resins, one that is obtained by lactide ring-opening polymerization is hydrolyzed by microorganisms into poly(L-form lactic acid), eventually into L-form lactic acid. L-form lactic acid is confirmed to be safe to human body, and hence the aliphatic polyester resin comprised of L-form lactic acid is preferred. However, the polylactic acid-based aliphatic polyester resin used in the present invention is not limited to this resin, and therefore the lactide used in the production of the resin is not limited to the L-form lactide.

On the other hand, the nucleating agent used in the present invention is an organic compound having a melting or softening temperature of 80 to 300°C and having a melting entropy of about 41.84 to 418.4 J/k/mol, and specific examples of organic compounds include an aliphatic carboxylic acid amide, an aliphatic carboxylic acid ester, an aliphatic carboxylic acid, and an aliphatic alcohol, and especially preferred is an aliphatic carboxylic acid amide.

With respect to the above-mentioned aliphatic carboxylic acid amide, there is no particular limitation as long as it has a melting or softening temperature in the range of 80 to 300°C and has melting entropy in the range of about 41.84 to 418.4 J/k/mol. The aliphatic carboxylic acid amide includes an aliphatic amide (see page 389 of "10899 Chemical Products", published by The Chemical Daily Co., Ltd. in 1989).

The aliphatic carboxylic acid amide is a compound containing at least one structure such that a carbonyl carbon is bonded to nitrogen. Specifically, the aliphatic carboxylic acid amide includes a compound having a linkage generally called amide linkage, and also includes a compound having a linkage generally called urea linkage. A hydrogen atom or an aliphatic group is bonded to each of the carbonyl carbon and the nitrogen atom bonded to the carbonyl carbon. Specific examples of the aliphatic group to be bonded include not only aliphatic groups but also aromatic groups, combinations of these groups, and the group consisting of residues having a structure such that the above groups are bonded through oxygen, nitrogen, sulfur, silicon, or phosphorus, and further specific examples include the group consisting of residues having a structure such that the above group is substituted with, for example, a hydroxyl group, an alkyl group, a cycloalkyl group, an allyl group, an alkoxyl group, a cycloalkoxyl group, an allyloxyl group, or a halogen (such as F, Cl, or Br). By appropriately selecting these substituents, the effect of the aliphatic carboxylic acid amide as a nucleating agent can be adjusted, thus making it possible to adjust the properties (such as heat resistance and mechanical strength) of the biodegradable resin composition of the present invention comprising an aliphatic polyester resin including a lactic acid polymer.

Specific examples of aliphatic carboxylic acid amides include lauramide, palmitamide, stearamide, erucamide, behenamide, N-stearylstearamide, methylolstearamide, methylolbehenamide, dimethylol oil amide, dimethyllauramide, and dimethylstearamide. In addition, examples include ethylenebisoleamide, ethylenebisstearamide, ethylenebislauramide, hexamethylenebisoleamide, butylenebisstearamide, m-xylenebisstearamide, m-xylenebis-12-hydroxystearamide, N,N'-dioleyladipamide, N,N'-distearyladipamide, N,N'-distearylisophthalamide, N,N'-distearylterephthalamide, N-butyl-N'-stearylurea, N-propyl-N'-stearylurea, N-allyl-N'-stearylurea, and N-stearyl-N'-stearylurea.

Of these, especially preferred are ethylenebisstearamide, palmitamide, stearamide, erucamide, behenamide, ethylenebisoleamide, ethylenebislauramide, N-stearylstearamide, m-xylenebisstearamide, and m-xylenebis-12-hydroxystearamide.

As the additive for suppressing hydrolysis of the above-mentioned biodegradable aliphatic polyester resin used in the present invention, a compound having reactivity to a carboxylic acid and a hydroxyl group which are the terminal functional groups of a polyester resin, for example, a carbodiimide compound, an isocyanate compound, and an oxazoline compound can be used, and especially preferred is a carbodiimide compound since it can be well meld-kneaded with polyester and suppress hydrolysis even in a small amount.

As the carbodiimide compound having at least one carbodiimide group per molecule (including a polycarbodiimide compound), for example, there can be mentioned ones which can be synthesized by, using an organophosphorus compound or an organometal compound as a catalyst, subjecting an isocyanate polymer to decarboxylation-condensation reaction in the absence of a solvent or in an inert solvent at about 70°C or higher.

Examples of monocarbodiimide compounds contained in the above carbodiimide compound include dicyclohexylcarbodiimide, diisopropylcarbodiimide, dimethylcarbodiimide, diisobutylcarbodiimide, dioctylcarbodiimide, diphenylcarbodiimide, and naphthylcarbodiimide. Of these, preferred are dicyclohexylcarbodiimide and diisopropylcarbodiimide especially from the viewpoint of the commercial availability.

The carbodiimide compound can be mixed (incorporated) into a biodegradable plastic by melt-kneading using an extruder. The biodegradation rate of the biodegradable plastic used in the present invention can be adjusted by changing the type and amount of the carbodiimide compound incorporated, and hence, the type and amount of the carbodiimide compound are determined according to the desired product.

Next, the present invention will be described with reference to the following Examples and Comparative Examples. Figs. 6 and 7 are graphs individually showing the relationship between the temperature and the storage elastic modulus with respect to each of the biodegradable resin composition obtained by incorporating a nucleating agent, natural mica, and an additive for suppressing hydrolysis into polylactic acid containing no special additive (Examples), and polylactic acid containing no these additives (Comparative Example).

First, the methods for measuring a storage elastic modulus and a glass transition temperature (Tg) are described below. The measuring apparatus and conditions for measurement are the same as those mentioned above.
Measuring apparatus: Viscoelasticity analyzer, manufactured and sold by Rheometric Scientific Inc.
Specimen size: length: 50 mm × width: 7 mm × thickness: 1 mm
Frequency: 6.28 (rad/s)
Starting temperature in measurement: 0°C
End temperature in measurement: 160°C
Heating rate: 5°C/min
Strain: 0.05 %

### Comparative Example 5

As shown in Fig. 6, in the specimen prepared from Lacea H100J (manufactured and sold by Mitsui Chemicals Co., Ltd.) which is polylactic acid, the storage elastic modulus E' was rapidly lowered at around the glass transition temperature Tg (60°C) of polylactic acid, and reached the minimum value at about 100°C. Then, the storage elastic modulus rapidly rose, and exhibited an almost constant value in the range of about 120 to 140°C. The storage elastic modulus in the range of 70 to 140°C was 1 × 10⁸ or less.

### Example 20

To Lacea H100J were added 10 % by weight of agglomerated mica powder 41PU5 having a particle diameter of 40 to 50 µm (containing 0.8 % by weight of an urethane resin binder; manufactured and sold by Yamaguchi Mica Industry Co., Ltd.), which was obtained by granulation of natural mica, 1 % by weight of Carbodilite HMV-10B (manufactured and sold by Nisshinbo Industries, Inc.) as an additive for suppressing hydrolysis, and 1 % by weight of ethylenebisstearamide (aliphatic carboxylic acid amide) as an organic nucleating agent and mixed together, and then melt-blended by means of a single-screw kneader set at 180°C and the resultant composition was pelletized, followed by hot-pressing by means of a hot pressing machine set at 170°C, thus preparing a plate material having a thickness of 1 mm. Then, a storage elastic modulus was measured with respect to the specimen cut out from the prepared plate material. As shown in Fig. 6, differing from Comparative Example 5, a rapid lowering at around the Tg (60°C) of polylactic acid was not observed in the storage elastic modulus of the specimen prepared in Example 20, and the storage elastic modulus in the range of 70 to 140°C was considerably increased, especially at about 100 to about 120°C, the storage elastic modulus was about 1 × 10⁹.

### Example 21

The specimen prepared in Example 20 was subjected to aging at 120°C for 60 seconds. As s result, as shown in Fig. 6, the storage elastic modulus of the specimen in the range of 60 to 100°C was considerably increased, as compared to that in Example 20.

### Example 22

To Lacea H100J were added 10 % by weight of agglomerated mica powder 41PU5, 1 % by weight of Carbodilite HMV-10B as an additive for suppressing hydrolysis, and 1 % by weight of erucamide (aliphatic carboxylic acid amide) as an organic nucleating agent, and then a specimen was prepared in substantially the same manner as in Example 1, and a storage elastic modulus was measured with respect to the prepared specimen. As shown in Fig. 7, the storage elastic modulus of the specimen prepared in this Example 22 was considerably increased, as compared to that in Comparative Example 20.

### Example 23

The specimen prepared in Example 22 was subjected to aging at 120°C for 60 seconds. As a result, as shown in Fig. 7, the storage elastic modulus of the specimen prepared in Example 23 in the range of 70 to about 100°C was further increased, as compared to that in Example 22.

### Example 24

To Lacea H100J were added 10 % by weight of agglomerated mica powder 41PU5, 1 % by weight of Carbodilite HMV-10B as an additive for suppressing hydrolysis, and 1 % by weight of tributyl acetylcitrate (aliphatic carboxylic acid ester) as an organic nucleating agent, and then a specimen was prepared in substantially the same manner as in Example 20, and the prepared specimen was subjected to aging at 120°C for 60 seconds. As a result, the storage elastic modulus of the resultant specimen was considerably increased, as compared to that in Comparative Example 5 (not shown).

### Example 25

To Lacea H100J were added 10 % by weight of agglomerated mica powder 41PU5, 1 % by weight of Carbodilite HMV-10B as an additive for suppressing hydrolysis, and 1 % by weight of diisodecyl adipate (aliphatic carboxylic acid ester) as an organic nucleating agent, and then a specimen was prepared in substantially the same manner as in Example 20, and the prepared specimen was subjected to aging at 120°C for 60 seconds. As a result, the storage elastic modulus of the resultant specimen was considerably increased, as compared to that in Comparative Example 5 (not shown).

### Example 26

The pellets obtained in Example 20 was heated so that the resin temperature became 180°C, and then placed into a mold whose inner surface was rapidly heated to 120°C by radio frequency induction heating using a coil, and molded, followed by slow cooling. By heating the mold to 120°C, aging was affected to the resin during injection molding, so that an increase in the elastic modulus was observed (not shown).

The biodegradable resin composition of the present invention comprises an aliphatic polyester resin having incorporated thereinto an organic nucleating agent and natural mica. Therefore, the mechanical strength of the biodegradable resin composition of the present invention is increased, so that not only be the composition unlikely to suffer deformation and warpage during mechanical processing, but also the composition is improved in dimensional stability. Thus, from the biodegradable resin composition of the present invention, there can be provided a material for producing housings having a satisfactory mechanical strength for household electric appliances and electronic equipment. Specifically, the biodegradable resin used in the composition of the present invention is an aliphatic polyester resin, and hence the composition can be widely used not only in housings for household electric appliances and electronic equipment but also in materials for agriculture, forestry, and fisheries, and materials for civil engineering works, and the field of packaging and container.

The biodegradable resin composition of the present invention has incorporated thereinto, as the organic nucleating agent, at least one compound selected from the group consisting of an aliphatic carboxylic acid amide and an aliphatic carboxylic acid ester. Therefore, the biodegradable resin composition is further improved in elastic modulus, and also improved in mechanical strength.

In the biodegradable resin composition of the present invention, the natural mica is present in an amount of 5.0 to 20.0 % by weight, with regard to the weight of the aliphatic polyester resin. Therefore, an effect of considerably improving the elastic modulus can be obtained. When the amount of the natural mica is less than 5.0 % by weight, the effect of improving the elastic modulus is unsatisfactory. On the other hand, when the amount of the natural mica exceeds 20.0 % by weight, the effect of improving the elastic modulus is not further increased, and the natural mica is difficult to be uniformly kneaded and incorporated into the biodegradable resin. Further, pellets obtained from the resultant kneaded mixture have rough surfaces, so that a molded article produced from the pellets disadvantageously has a surface with poor smoothness.

In the biodegradable resin composition of the present invention, the organic nucleating agent is present in an amount of 0.5 to 5.0 % by weight, with regard to the weight of the aliphatic polyester resin. Therefore, an effect of considerably improving the elastic modulus can be obtained. When the amount of the organic nucleating agent is less than 0.5 % by weight, the effect of improving the elastic modulus is unsatisfactory. On the other hand, when the amount of the organic nucleating agent exceeds 5.0 % by weight, the effect of improving the elastic modulus is not further increased, and the compatibility between the aliphatic polyester resin and the above-mentioned additive is lowered, causing disadvantageous bleeding of the nucleating agent on the surface of the biodegradable resin composition with the lapse of time.

In the biodegradable resin composition of the present invention, polylactic acid is used as the aliphatic polyester resin. Therefore, the composition has an advantage in that the hydrolysis product of the biodegradable resin composition is especially highly safe.

The biodegradable resin composition of the present invention contains an aliphatic polyester resin, an organic nucleating agent, natural mica, and an additive for suppressing hydrolysis of the aliphatic polyester resin. For this reason, by determining the type and amount of the additive for suppressing hydrolysis according to the application and properties of molded articles (products) to be produced from the biodegradable resin composition, there can be provided a material for shaping comprised of a biodegradable resin composition that meets various demands. Further, by incorporating into the composition the above-mentioned additive for suppressing hydrolysis in an appropriate amount, the composition is improved in elastic modulus at high temperatures, especially at the glass transition temperature of the biodegradable resin or higher.

The biodegradable resin composition of the present invention has incorporated thereinto, as the additive for suppressing hydrolysis, a carbodiimide compound which exhibits a remarkable effect in a small amount. For this reason, by determining the type and amount of the carbodiimide compound according to the application and properties of molded articles (products) to be produced from the biodegradable resin composition, there can be provided a material for shaping comprised of a biodegradable resin composition that meets various demands.

In the biodegradable resin composition of the present invention, the additive for suppressing hydrolysis of the biodegradable resin is in an amount of 0.1 to 2.0 % by weight, based on the weight of the aliphatic polyester resin. Therefore, not only be the effect of improving the composition in elastic modulus at high temperatures especially remarkable, but also the composition is improved in chemical stability, for example, weathering resistance, light resistance, and heat resistance. Further, in the above range for the amount of the additive, the compatibility between the biodegradable resin and the additive is enhanced, so that the mixing state of the composition becomes stable. When the amount of the additive is less than 0.1 % by weight, the effect aimed at by addition of the additive is unsatisfactory, and, even when the amount of the additive exceeds 2.0 % by weight, the hydrolysis resistance effect is not further increased.

The housing material of the present invention comprises a biodegradable resin composition comprising an aliphatic polyester resin having incorporated thereinto an organic nucleating agent and natural mica. Therefore, the housing material of the present invention can be a material for producing housings having a satisfactory mechanical strength for household electric appliances and electronic equipment. Further, in the housing produced from a housing material using the biodegradable resin composition of the present invention, there are many waste disposal methods, and, even when used articles are disposed of as such, they cannot remain as waste for a long term and do not spoil the sight at which they are placed. Alternatively, they can be recycled as a material like general resins. Further, the biodegradable resin composition of the present invention does not contain an injurious substance, such as a heavy metal or an organochlorine compound. Therefore, there is no danger that the biodegradable resin compound generates an injurious substance after being disposed of or when incinerated. Furthermore, when the biodegradable resin is produced from grain resources as a raw material, the material also has an advantage in that it need not use resources being exhausted including petroleum.

The method for producing a biodegradable resin composition of the present invention is characterized in that it comprises kneading together at 150 to 200°C an aliphatic polyester resin, natural mica in an amount of 5.0 to 20.0 % by weight, in accordance with the weight of the aliphatic polyester resin, and an organic nucleating agent. By the production method of the present invention, the natural mica and the polyester resin can be uniformly kneaded, so that a biodegradable resin composition having uniform properties and having remarkably improved elastic modulus can be easily obtained by a simple and convenient kneading apparatus or process. By shaping the resultant biodegradable resin material by injection molding or the like, molded articles (such as injection-molded articles and extruded articles) having excellent properties can be stably produced. When the temperature for the above kneading is lower than 150°C, the kneading is unsatisfactory. On the other hand, when the kneading temperature exceeds 200°C, the biodegradable resin is likely to suffer thermal decomposition.

In the method for improving a biodegradable resin material in elastic modulus of the present invention, the biodegradable resin composition of one aspect of the present invention is allowed to stand for 30 to 180 seconds while heating at 80 to 130°C (aging). Therefore, in the method of the present invention, the effect of improving the elastic modulus is further increased, as compared to the effect obtained in the case where no aging is conducted.

In the method for improving a biodegradable resin material in elastic modulus of the present invention, the biodegradable resin composition of one aspect of the present invention is injected into a mold to form an injection-molded product, and then the injection-molded product in the mold is heated at 80 to 130°C for 30 to 180 seconds. Further, in the method for improving elastic modulus according to the present invention, the biodegradable resin composition is injected into a mold whose inner surface is heated by radio frequency induction heating to form an injection-molded product, and then the injection-molded product in the mold is heated at 80 to 130°C for 30 to 180 seconds. Therefore, each method for improving elastic modulus of the present invention can be practiced by a simple process.

## Claims

1. A method for improving a biodegradable resin material in elastic modulus, wherein said material is comprised mainly of a biodegradable resin,
said method comprising a step of irradiating said biodegradable resin material with a microwave.

2. A method for improving a biodegradable resin material in elastic modulus, wherein said material is comprised mainly of a biodegradable resin, said method comprising the steps of:
injecting said biodegradable resin material into a mold to form an injection-molded product, and
irradiating said biodegradable resin material in the form of the injection-molded product in said mold with a microwave.

3. The method according to claim 1 or 2, wherein said biodegradable resin material is irradiated with a microwave is 1 to 10 minutes.

4. The method according to claim 1 or 2, wherein said biodegradable resin is an aliphatic polyester resin.

5. The method according to claim 4, wherein said aliphatic polyester resin is polylactic acid.

6. The method according to claim 1 or 2, wherein said biodegradable resin material contains an additive for suppressing hydrolysis.

7. The method according to claim 6, wherein said additive for suppressing hydrolysis is a carbodiimide compound.

8. The method according to claim 7, wherein said additive for suppressing hydrolysis is present in an amount of 0.1 to 2.0 % by weight, with regard to the weight of said aliphatic polyester resin.

9. The method according to claim 1 or 2, wherein said biodegradable resin material contains mica.

10. The method according to claim 9, wherein said mica is synthetic mica.

11. The method according to claim 10, wherein said synthetic mica is present in an amount of 0.5 to 20.0 % by weight, with regard to the weight of said biodegradable resin.

12. The method according to claim 9, wherein said mica is natural mica.

13. The method according to claim 12, wherein said natural mica is present in an amount of 5.0 to 20.0 % by weight, with regard to the weight of said biodegradable resin.

14. A biodegradable resin composition comprising a biodegradable resin and natural mica.

15. The biodegradable resin composition according to claim 14, wherein said natural mica is agglomerated mica obtained by granulation using one of an acrylic resin, an epoxy resin, and a urethane resin as a binder.

16. The biodegradable resin composition according to claim 14, which contains 5.0 to 30.0 % by weight of said natural mica.

17. The biodegradable resin composition according to claim 14, wherein said natural mica has an average particle diameter of 15 to 140 µm.

18. The biodegradable resin composition according to claim 14, wherein said biodegradable resin is an aliphatic polyester resin.

19. The biodegradable resin composition according to claim 18, wherein said aliphatic polyester resin is polylactic acid.

20. The biodegradable resin composition according to claim 14, further comprising an additive for suppressing hydrolysis of said biodegradable resin.

21. The biodegradable resin composition according to claim 20, wherein said additive for suppressing hydrolysis of said biodegradable resin is a carbodiimide compound.

22. The biodegradable resin composition according to claim 20, wherein said additive for suppressing hydrolysis of said biodegradable resin is present in an amount of 0.1 to 2.0 % by weight, with regard to the weight of said aliphatic polyester resin.

23. A housing material comprising a biodegradable resin composition according to claim 14.

24. The housing material according to claim 23, wherein said biodegradable resin composition further comprises an additive for suppressing hydrolysis of said biodegradable resin.

25. A method for improving a biodegradable resin material in elastic modulus, wherein said material is comprised mainly of a biodegradable resin,
said method comprising a step of adding natural mica to said biodegradable resin material.

26. The method according to claim 25, wherein the addition of said natural mica is conducted by kneading together at 150 to 200°C said biodegradable resin material and said natural mica in an amount of 10.0 to 30.0 % by weight, with regard to the weight of said biodegradable resin material.

27. A biodegradable resin composition comprising synthetic mica as a crystal nucleating agent and an aliphatic polyester resin.

28. The biodegradable resin composition according to claim 27, wherein said synthetic mica is present in an amount of 0.5 to 20.0 % by weight, with regard to the weight of said aliphatic polyester resin.

29. The biodegradable resin composition according to claim 27, wherein said aliphatic polyester resin is polylactic acid.

30. The biodegradable resin composition according to claim 27, wherein said synthetic mica is non-swellable synthetic mica.

31. The biodegradable resin composition according to claim 27, wherein said synthetic mica has an average particle diameter of 1 to 10 µm.

32. The biodegradable resin composition according to claim 27, further comprising an additive for suppressing hydrolysis of said biodegradable resin.

33. The biodegradable resin composition according to claim 32, wherein said additive for suppressing hydrolysis of said biodegradable resin is a carbodiimide compound.

34. The biodegradable resin composition according to claim 32, wherein said additive for suppressing hydrolysis of said biodegradable resin is present in an amount of 0.1 to 2.0 % by weight, with regard to the weight of said aliphatic polyester resin.

35. The biodegradable resin composition according to claim 27, further comprising natural mica.

36. The biodegradable resin composition according to claim 35, wherein said natural mica is present in an amount of 5.0 to 20.0 % by weight, with regard to the weight of said aliphatic polyester resin.

37. A housing material comprising a biodegradable resin composition according to claim 27.

38. A method for producing a biodegradable resin composition, said method comprising kneading together at 150 to 200°C an aliphatic polyester resin and synthetic mica in an amount of 0.5 to 20.0 % by weight, with regard to the weight of said aliphatic polyester resin.

39. A method for improving a biodegradable resin composition in elastic modulus, wherein said composition comprises synthetic mica as a crystal nucleating agent and an aliphatic polyester resin,
said method comprising a step of allowing said biodegradable resin composition to stand for 30 to 180 seconds while heating at 80 to 130°C.

40. A method for improving a biodegradable resin composition in elastic modulus, wherein said composition comprises synthetic mica as a crystal nucleating agent and an aliphatic polyester resin, said method comprising the steps of:
injecting said biodegradable resin composition into a mold to form an injection-molded product, and
heating said injection-molded product in said mold at 80 to 130°C for 30 to 180 seconds.

41. The method according to claim 40, wherein the inner surface of said mold is heated by radio frequency induction heating.

42. A biodegradable resin composition comprising an aliphatic polyester resin, an organic nucleating agent, and natural mica.

43. The biodegradable resin composition according to claim 42, wherein said organic nucleating agent is at least one compound selected from the group consisting of an aliphatic carboxylic acid amide and an aliphatic carboxylic acid ester.

44. The biodegradable resin composition according to claim 42, wherein said natural mica is present in an amount of 5.0 to 20.0 % by weight, with regard to the weight of said aliphatic polyester resin.

45. The biodegradable resin composition according to claim 42, wherein said organic nucleating agent is present in an amount of 0.5 to 5.0 % by weight, with regard to the weight of said aliphatic polyester resin.

46. The biodegradable resin composition according to claim 42, wherein said aliphatic polyester resin is polylactic acid.

47. The biodegradable resin composition according to claim 42, further comprising an additive for suppressing hydrolysis.

48. The biodegradable resin composition according to claim 47, wherein said additive for suppressing hydrolysis is a carbodiimide compound.

49. The biodegradable resin composition according to claim 47, wherein said additive for suppressing hydrolysis is present in an amount of 0.1 to 2.0 % by weight, with regard to the weight of said aliphatic polyester resin.

50. A housing material comprising a biodegradable resin composition according to claim 42.

51. A method for producing a biodegradable resin composition, said method comprising kneading together at 150 to 200°C an aliphatic polyester resin, natural mica in an amount of 5.0 to 20.0 % by weight, based on the weight of said aliphatic polyester resin, and an organic nucleating agent.

52. A method for improving a biodegradable resin composition in elastic modulus, wherein said composition comprises an aliphatic polyester resin, an organic nucleating agent, and natural mica,
said method comprising a step of allowing said biodegradable resin composition to stand for 30 to 180 seconds while heating at 80 to 130°C.

53. A method for improving a biodegradable resin composition in elastic modulus, wherein said composition comprises an aliphatic polyester resin, an organic nucleating agent, and natural mica,
said method comprising the steps of:
injecting said biodegradable resin composition into a mold to form an injection-molded product, and
heating said injection-molded product in said mold at 80 to 130°C for 30 to 180 seconds.

54. The method according to claim 53, wherein the inner surface of said mold is heated by radio frequency induction heating.
